(19) **Europäisches Patentamt / European Patent Office / Office européen des brevets**

(11) **EP 4 575 015 A1**

(12) **EUROPEAN PATENT APPLICATION**
published in accordance with Art. 153(4) EPC

(43) Date of publication:
25.06.2025 Bulletin 2025/26

(21) Application number: 23882246.4

(22) Date of filing: 31.08.2023

(51) International Patent Classification (IPC):
$C21D\ 9/46$ (2006.01)  $C22C\ 38/00$ (2006.01)
$C22C\ 38/06$ (2006.01)  $C22C\ 38/60$ (2006.01)

(52) Cooperative Patent Classification (CPC):
C21D 9/46; C22C 38/00; C22C 38/06; C22C 38/60

(86) International application number:
PCT/JP2023/031994

(87) International publication number:
WO 2024/090032 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.10.2022 JP 2022171974

(71) Applicant: JFE Steel Corporation
Tokyo 100-0011 (JP)

(72) Inventors:
• ENDOH Kazuki
Tokyo 100-0011 (JP)

• KAWASAKI Yoshiyasu
Tokyo 100-0011 (JP)
• TOJI Yuki
Tokyo 100-0011 (JP)
• TADA Masaki
Tokyo 100-0011 (JP)
• TAKASHIMA Katsutoshi
Tokyo 100-0011 (JP)

(74) Representative: Hoffmann Eitle
Patent- und Rechtsanwälte PartmbB
Arabellastraße 30
81925 München (DE)

(54) **HIGH-STRENGTH PLATED STEEL SHEET AND METHOD FOR PRODUCING SAME**

(57) It is an object to provide a high-strength coated steel sheet having a TS of 1180 MPa or more, having excellent formability without a reduction in ductility after coating treatment, and having excellent high LME resistance. It is another object to provide a method for producing the high-strength coated steel sheet.

The high-strength coated steel sheet has a prescribed chemical composition. The high-strength coated steel sheet has, at a position 1/4 of the sheet thickness, a steel microstructure in which the area fraction of ferrite is 1% or more and 30% or less, in which the area fraction of fresh martensite is 1% or less and 15% or more, in which the total area fraction of bainite and tempered martensite is 35% or more and 90% or less, and in which the area fraction of retained austenite is 6% or more. In the steel sheet, a value obtained by dividing the average amount (% by mass) of Mn in retained austenite grains having an aspect ratio of 2.0 or more by the average amount (% by mass) of Mn in ferrite is 1.1 or more. The high-strength coated steel sheet has excellent post-coating treatment ductility and excellent LME resistance.

EP 4 575 015 A1

**Description**

Technical Field

The present invention relates to a high-strength coated steel sheet suitable for members used in industrial fields such as automobile and electronics industries and having excellent formability and to a method for producing the high-strength coated steel sheet. In particular, the present invention is to obtain a high-strength coated steel sheet having a TS (tensile strength) of 1180 MPa or more and having excellent formability. This high-strength coated steel sheet has ductility that does not decrease even after coating treatment and has excellent LME (Liquid Metal Embrittlement) resistance. The formability as used herein includes ductility and bendability.

Background Art

In recent years, improving the fuel economy of automobiles has become an important issue from the viewpoint of global environmental conservation. Accordingly, there have been active moves afoot to increase the strength of vehicle body materials to reduce their thickness to thereby reduce the weight of vehicle bodies themselves. However, since the strengthening of steel sheets leads to deterioration of formability, there is a demand for development of materials having high strength and high formability.

It has recently been found that, when high-strength galvanized steel sheets are spot-welded, zinc in the coated layers diffuses into crystal grain boundaries in the surface layers of the steel sheets and this results in liquid metal embrittlement (LME), causing intergranular cracking (LME cracking). The LME cracking may also occur in a high-strength cold rolled steel sheet having no galvanized layer when the welding partner is a galvanized steel sheet, and therefore the LME cracking is also perceived as a problem in both of these high-strength steel sheets. There is therefore a need for high-strength steel sheets having excellent LME resistance so that they can be applied to frame parts.

High-strength steel sheets that utilize deformation induced transformation of retained austenite have been proposed as high-strength steel sheets having excellent ductility. These steel sheets have a microstructure including retained austenite, and the presence of retained austenite allows the steel sheets to be easily shaped. After the shaping, the steel sheets can have high strength because the retained austenite has transformed to martensite. However, in steel sheets including retained austenite, the retained austenite may decompose during coating treatment, and the ductility may decrease. This is particularly significant during alloying treatment after immersion in the coating bath.

For example, Patent Literature 1 proposes a high-strength steel sheet that has a tensile strength of 1000 MPa or more, a total elongation (EL) of 30% or more, and very high ductility and that is produced by utilizing deformation induced transformation of retained austenite. This steel sheet is produced using so-called austempering treatment in which a steel sheet containing C, Si, and Mn as main components is austenized, then quenched to a bainite transformation temperature range, and isothermally held. As a result of the austempering treatment, C is concentrated in austenite, and retained austenite is formed. To obtain a large amount of retained austenite, it is necessary to add a large amount of C, i.e., more than 0.3% of C. However, as the concentration of C in the steel increases, its spot weldability deteriorates. In particular, when the C concentration exceeds 0.3%, the deterioration is significant, and it is difficult to practically use the steel sheet for automobiles.

Patent Literature 2 discloses long-term heat treatment of a hot rolled steel sheet using steel containing 0.50% by mass or more and 12.00% by mass or less of Mn in a ferrite-austenite two-phase temperature region. With this treatment, Mn is concentrated in untransformed austenite, and the retained austenite formed has a large aspect ratio, so that the steel sheet has improved uniform elongation. However, no study was carried out on the achievement of elongation, bendability, and LME resistance simultaneously.

Patent Literature 3 discloses a method including controlling the rolling reduction in the final pass of cold rolling and the dew point during subsequent annealing to thereby form a soft layer in the surface layer of a steel sheet and then controlling the characteristics of grain boundaries. In the high-strength steel sheet obtained with this method, ductility, stretch flangeability, bendability, and LME resistance are satisfied in a comprehensive manner. However, no study was carried out on the achievement of ductility and LME resistance after coating treatment simultaneously. There is room to further improve the LME resistance and also improve the post-coating treatment ductility by controlling the components of the steel sheet appropriately, while the formation of the soft layer in the surface layer that may reduce the post-coating treatment ductility is prevented.

Citation List

Patent Literature

PTL 1: Japanese Unexamined Patent Application Publication No. S61-157625
PTL 2: Japanese Patent No. 6123966
PTL 3: Japanese Patent No. 6901050

Summary of Invention

Technical Problem

The present invention has been made in view of the foregoing circumstances, and it is an object to provide a high-strength coated steel sheet having a TS of 1180 MPa or more, having excellent formability while ductility does not decrease even after coating treatment, and having excellent LME resistance. Another object is to provide a method for producing the high-strength coated steel sheet. The formability as used herein means ductility and bendability. The coating treatment as used herein is intended to include both treatment for forming only a coated layer and alloying treatment including the treatment for forming a coated layer and alloying treatment of the formed coated layer.

Solution to Problem

To solve the foregoing problems, the present inventors have conducted extensive studies from the viewpoint of the chemical composition of the steel sheet and its production method and have found the following.

Specifically, the chemical composition of a steel sheet containing Mn in an amount of 0.10% by mass or more and 8.00% by mass or less and other alloying elements is adjusted appropriately. The steel sheet is hot-rolled, optionally held in a temperature range of lower than or equal to the $Ac_1$ transformation temperature for longer than 1800 s, optionally subjected to pickling treatment, and then cold-rolled. Then the resulting steel sheet is held in a temperature range of higher than or equal to the $Ac_3$ transformation temperature - 50°C for 20 s or longer and 1800 s or shorter and then cooled to a cooling stop temperature lower than or equal to the martensite start temperature. Next, the resulting steel sheet is reheated to a temperature in a range of higher than or equal to Bs - 150° and lower than or equal to Bs + 150°C, i.e., a reheating temperature in the temperature range in which bainite transformation with $\alpha/\gamma$ interface migration occurs. Then the resulting steel sheet is held at the reheating temperature for 2 s or longer and 1800 s or shorter and cooled to room temperature. In this manner, film-like austenite in which C is concentrated can be formed in a subsequent annealing step. The film-like austenite serves as nuclei for fine and highly stable retained austenite grains which have a large aspect ratio and in which Mn and C are significantly concentrated. The inventors have found that the formation of the film-like austenite is important.

After the cooling, the steel sheet is heated to a temperature in a range of from the $Ac_1$ transformation temperature - 150°C to the $Ac_1$ transformation temperature at a heating rate of 2°C/s or more and held at a temperature in a range of higher than or equal to the $Ac_1$ transformation temperature for 20 s or longer and 600 s or shorter. Then the resulting steel sheet is cooled to a cooling stop temperature lower than or equal to the martensite start temperature (Ms') of the highly stable austenite and reheated to a reheating temperature in a range of higher than or equal to Ms' and lower than or equal to Ms' + 350°C. Then the resulting steel sheet is held at the reheating temperature for 2 s or longer and 600 s or shorter, subjected to coating treatment, and then cooled to room temperature. The resulting steel sheet has the following steel microstructure. Specifically, the area fraction of ferrite is 1% or more and 30% or less, and the area fraction of fresh martensite is 1% or more and 15% or less. The total area fraction of bainite and tempered martensite is 35% or more and 90% or less, and the area fraction of retained austenite is 6% or more. A value obtained by dividing the average amount (% by mass) of Mn in retained austenite grains having an aspect ratio of 2.0 or more by the average amount (% by mass) of Mn in ferrite is 1.1 or more. At the same time, $Mn^{\gamma}_{eq.}$ is 5.0 or more, and $\delta_{LME}$ is 1.0 or less. According to the present invention, a high-strength coated steel sheet having excellent formability and LME resistance can be produced. Here, $Mn^{\gamma}_{eq.}$ and $\delta_{LME}$ are calculated using the following formulas (1) and (2).

$$Mn^{\gamma}_{eq.} = \{ln([C]\gamma - 0.2) + ln([Mn]\gamma - 2.6) + 4.30\} \times \lambda\gamma / D\gamma \qquad (1)$$

$$\delta_{LME} = 1 / 2 \times log\{(1 + [C]) / (0.35 - [C]) \} + \{exp([Si] / 3.23) - 1\} + \{exp([Mn] / 22) - 1\} \qquad (2)$$

Here, $[C]\gamma$ and $[Mn]\gamma$ are the average amount (% by mass) of C and the average amount (% by mass) of Mn, respectively, that are averaged over all retained austenite grains.

$\lambda\gamma$ is the average aspect ratio of all the retained austenite grains.

$D\gamma$ is the average equivalent circular diameter ($\mu$m) of all the retained austenite grains.

[C], [Si], and [Mn] are the amount (% by mass) of C, the amount (% by mass) of Si, and the amount (% by mass) of Mn, respectively, with respect to the total amount of the steel sheet.

The present invention has been made based on the above findings and is summarized as follows.

[1] A high-strength coated steel sheet having a chemical composition containing, in % by mass, C: 0.030% or more and 0.300% or less, Si: 0.01% or more and 2.50% or less, Mn: 0.10% or more and 8.00% or less, P: 0.100% or less, S: 0.0200% or less, Al: 0.100% or less, N: 0.0100% or less, and O: 0.0100% or less, with the balance being Fe and incidental impurities, wherein the high-strength coated steel sheet has, at a position 1/4 of a sheet thickness, a steel microstructure in which an area fraction of ferrite is 1% or more and 30% or less, in which an area fraction of fresh martensite is 1% or more and 15% or less, in which a total area fraction of bainite and tempered martensite is 35% or more and 90% or less, and in which an area fraction of retained austenite is 6% or more, wherein a value obtained by dividing an average amount (% by mass) of Mn in retained austenite grains having an aspect ratio of 2.0 or more by an average amount (% by mass) of Mn in the ferrite is 1.1 or more, wherein $Mn^{\gamma}_{eq.}$ determined from formula (1) is 5.0 or more, and wherein $\delta_{LME}$ determined from formula (2) is 1.0 or less:

$$Mn^{\gamma}_{eq.} = \{\ln([C]\gamma - 0.2) + \ln([Mn]\gamma - 2.6) + 4.30\} \times \lambda\gamma / D\gamma \tag{1}$$

$$\delta_{LME} = 1 / 2 \times \log\{(1 + [C]) / (0.35 - [C])\} + \{\exp([Si] / 3.23) - 1\} + \{\exp([Mn] / 22) - 1\} \tag{2}$$

where $[C]\gamma$ and $[Mn]\gamma$ are an average amount (% by mass) of C and an average amount (% by mass) of Mn, respectively, that are averaged over all retained austenite grains; $\lambda\gamma$ is an average aspect ratio of all the retained austenite grains; $D\gamma$ is an average equivalent circular diameter ($\mu$m) of all the retained austenite grains; and [C], [Si], and [Mn] are an amount (% by mass) of C, an amount (% by mass) of Si, and an amount (% by mass) of Mn, respectively, with respect to a total amount of the steel sheet.

[2] The high-strength coated steel sheet according to [1], wherein the chemical composition further contains, in mass%, at least one element selected from Ti: 0.200% or less, Nb: 0.200% or less, V: 0.200% or less, Ta: 0.10% or less, W: 0.10% or less, B: 0.0100% or less, Cr: 1.00% or less, Mo: 1.00% or less, Co: 1.000% or less, Ni: 1.00% or less, Cu: 1.00% or less, Sn: 0.200% or less, Sb: 0.200% or less, Ca: 0.0100% or less, Mg: 0.0100% or less, REMs: 0.0100% or less, Zr: 0.100% or less, Te: 0.100% or less, Hf: 0.10% or less, and Bi: 0.200% or less.

[3] The high-strength coated steel sheet according to [1] or [2], wherein a value obtained by dividing a total amount of C in all the retained austenite grains by an amount of C in a $T_0$ microstructure is less than 1.0.

[4] The high-strength coated steel sheet according to any one of [1] to [3], wherein the high-strength coated steel sheet includes a galvanized layer.

[5] The high-strength coated steel sheet according to [4], wherein the galvanized layer is a galvannealed layer.

[6] A method for producing the high-strength coated steel sheet according to any of [1] to [3], the method including: heating a steel slab having the chemical composition; hot-rolling at a finish rolling delivery temperature of 750°C or higher and 1000°C or lower; coiling at 300°C or higher and 750°C or lower; cold-rolling at a rolling reduction of 50% or less; holding at a temperature in a range of higher than or equal to an Ac$_3$ transformation temperature - 50°C for 20 s or longer and 1800 s or shorter; cooling to a cooling stop temperature lower than or equal to martensite start temperature; reheating to a reheating temperature in a range of higher than or equal to Bs - 150°C and lower than or equal to Bs + 150°C, where Bs is a temperature determined from formula (3); then holding at the reheating temperature for 2 s or longer and 1800 s or shorter; cooling to room temperature; then heating to a temperature in a range from an Ac$_1$ transformation temperature - 150°C to the Ac$_1$ transformation temperature at a heating rate of 2°C/s or more; holding at a temperature in a range of higher than or equal to the Ac$_1$ transformation temperature for 20 s or longer and 600 s or shorter; cooling to a cooling stop temperature lower than or equal to Ms' determined from formula (4); reheating to a reheating temperature in a range of higher than or equal to Ms' and lower than or equal to Ms' + 350°C; holding at the reheating temperature for 2 s or longer and 600 s or shorter; performing coating treatment; and cooling to room temperature:

$$Bs = 732 - 202 \times [C] - 108 \times [Si] - 85 \times [Mn] - 39 \times [Mo] \tag{3}$$

where [C], [Si], [Mn], and [Mo] are an amount (% by mass) of C, an amount (% by mass) of Si, an amount (% by mass) of Mn, and an amount (% by mass) of Mo, respectively, with respect to the total amount of the steel sheet and are each zero when a corresponding element is not contained, and

$$Ms' = Ms \times 15 / Mn^{\gamma}_{eq.} \tag{4}$$

where Ms is the martensite start temperature, and $Mn^{\gamma}_{eq.} = 15$ when $Mn^{\gamma}_{eq.} < 15$.

[7] The method for producing the high-strength coated steel sheet according to [6], wherein the coating treatment is galvanizing treatment.

[8] The method for producing the high-strength coated steel sheet according to [7], further including, after the galvanizing treatment, performing galvannealing treatment at 450°C or higher and 600°C or lower.

[9] The method for producing the high-strength coated steel sheet according to any one of [6] to [8], further including, after the coiling but before the cold-rolling, holding at a temperature in a range of lower than or equal to the $Ac_1$ transformation temperature for longer than 1800 s.

Advantageous Effects of Invention

According to the present invention, a high-strength coated steel sheet is obtained which has a TS (tensile strength) of 1180 MPa or more, whose ductility does not deteriorate even after coating treatment, which has excellent ductility and excellent bendability and has excellent LME resistance. When the high-strength coated steel sheet obtained by the production method of the invention is used, for example, for structural members of automobiles, the weight of the vehicle bodies can be reduced and the fuel economy can be improved. Therefore, the high-strength coated steel sheet is extremely valuable in industrial applications.

Description of Embodiments

The details of embodiments of the present invention will next be specifically described. "%" representing the content of a component element means "% by mass" unless otherwise specified.

The reasons for limiting the ranges of the chemical composition of the steel in the invention as described above will be described.

C: 0.030% or more and 0.300% or less

C is one of the basic components of the steel. In particular, in the present invention, C is an important element that affects the fractions of martensite, ferrite, and retained austenite. If the content of C is less than 0.030%, the fraction of martensite is small, and the desired TS is difficult to achieve. If the content of C exceeds 0.300%, the martensite becomes brittle, and the desired EL is difficult to achieve. Therefore, the content of C is 0.030% or more and 0.300% or less. The lower limit is preferably 0.050% or more and more preferably 0.070% or more. The upper limit is preferably 0.280% or less and more preferably 0.250% or less.

Si: 0.01% or more and 2.50% or less

Si is one of the basic components of the steel. In particular, in the present invention, Si inhibits formation of carbides during continuous annealing, facilitates formation of retained austenite, and is an element that affects the hardness of martensite and the fraction of the retained austenite. If the content of Si is less than 0.01%, the fraction of the retained austenite is small, and the desired EL is difficult to achieve. If the content of Si exceeds 2.50%, Zn easily enters austenite grain boundaries during spot welding. In this case, liquid metal embrittlement is significant, and the LME resistance deteriorates. Therefore, the content of Si is 0.01% or more and 2.50% or less. The lower limit is preferably 0.05% or more and more preferably 0.10% or more. The upper limit is preferably 2.00% or less and more preferably 1.80% or less.

Mn: 0.10% or more and 8.00% or less

Mn is one of the basic components of the steel. In particular, in the present invention, Mn is an important element that affects the fraction of martensite. Mn is an element that stabilizes retained austenite, is effective in obtaining excellent ductility, and increases the strength of the steel through solid solution strengthening. These effects are found when the amount of Mn in the steel is 0.10% or more. If the content of Mn exceeds 8.00%, the stability of the retained austenite is excessively high. In this case, the TRIP effect does not occur during working, and the desired ductility is not obtained. Therefore, the content of Mn is 0.10% or more and 8.00% or less. The lower limit is preferably 1.00% or more and more preferably 2.50% or more. The upper limit is preferably 6.00% or less and more preferably 4.20% or less.

P: 0.100% or less

P segregates at prior-austenite grain boundaries to embrittle the grain boundaries and decreases the deformability of the steel sheet, causing the EL to decrease. Therefore, the content of P must be 0.100% or less. No particular limitation is imposed on the lower limit of the content of P. However, since P is a solid solution strengthening element and can increase the strength of the steel sheet, the lower limit of the content of P is preferably 0.001% or more. Therefore, the content of P is 0.100% or less. The lower limit is preferably 0.001% or more. The upper limit is preferably 0.070% or less.

S: 0.0200% or less

S is present as sulfides and decreases the deformability of the steel sheet, causing the EL to decrease. Therefore, the content of S must be 0.0200% or less. No particular limitation is imposed on the lower limit of the content of S. However, in view of the limitations on the production technique, the lower limit is preferably 0.0001% or more. Therefore, the content of S is 0.0200% or less. The lower limit is preferably 0.0001% or more. The upper limit is preferably 0.0050% or less.

N: 0.0100% or less

N is present as nitrides and decreases the deformability of the steel sheet, causing the EL to decrease. Therefore, the content of N must be 0.0100% or less. No particular limitation is imposed on the lower limit of the content of N. However, in view of the limitations on the production technique, the content of N is preferably 0.0001% or more. Therefore, the content of N is 0.0100% or less. The lower limit is preferably 0.0001% or more. The upper limit is preferably 0.0050% or less.

Al: 0.100% or less

Al increases the $A_3$ transformation temperature, and this causes an increase in the amount of ferrite contained in the microstructure, so that the desired TS is difficult to achieve. Therefore, the content of Al must be 0.100% or less. No particular limitation is imposed on the lower limit of the content of Al. However, to inhibit the formation of carbides during continuous annealing and facilitate the formation of retained austenite, the lower limit of the content of Al is preferably 0.001% or more. Therefore, the content of Al is 0.100% or less. The lower limit is preferably 0.001% or more. The upper limit is preferably 0.050% or less.

O: 0.0100% or less

O is present as oxides and decreases the deformability of the steel sheet, causing the EL to decrease. Therefore, the content of O must be 0.0100% or less. No particular limitation is imposed on the lower limit of the content of O. However, in view of the limitations on the production technique, the lower limit of the content of O is preferably 0.0001% or more. Therefore, the content of O is 0.0100% or less. The lower limit is preferably 0.0001% or more. The upper limit is preferably 0.0050% or less.

The high-strength coated steel sheet according to the embodiment of the invention has the chemical composition containing the components described above, with the balance being Fe and incidental impurities. Examples of the incidental impurities include Zn, Pb, and As. The allowable total content of these impurities is 0.100% or less.

The high-strength coated steel sheet of the invention may further contain, in addition to the chemical composition described above, in % by mass,

at least one element selected from Ti: 0.200% or less, Nb: 0.200% or less, V: 0.200% or less, Ta: 0.10% or less, W: 0.10% or less, B: 0.0100% or less, Cr: 1.00% or less, Mo: 1.00% or less, Ni: 1.00% or less, Co: 1.000% or less, Cu: 1.00% or less, Sn: 0.200% or less, Sb: 0.200% or less, Ca: 0.0100% or less, Mg: 0.0100% or less, REMs: 0.0100% or less, Zr: 0.100% or less, Te: 0.100% or less, Hf: 0.10% or less, and Bi: 0.200% or less or a combination thereof.

When the contents of Ti, Nb, and V are each 0.200% or less, the amount of coarse precipitates and inclusions formed is not large, and the ultimate deformation ability of the steel sheet does not deteriorate, so that the bendability does not deteriorate. Therefore, the contents of Ti, Nb, and V are each preferably 0.200% or less. No particular limitation is imposed on the lower limits of the contents of Ti, Nb, and V. However, Ti, Nb, and V form fine carbides, nitrides, or carbonitrides during hot rolling or continuous annealing to thereby increase the strength of the steel sheet, so that the contents of Ti, Nb, and V are each more preferably 0.001% or more. Therefore, when Ti, Nb, and V are contained, the contents of Ti, Nb, and V are each 0.200% or less. The lower limits of the contents of Ti, Nb, and V contained are each more preferably 0.001% or more. The upper limits of the contents of Ti, Nb, and V contained are each more preferably 0.100% or less.

When the contents of Ta and W are each 0.10% or less, the amount of coarse precipitates and inclusions formed is not large, and the ultimate deformation ability of the steel sheet does not deteriorate, so that the bendability does not deteriorate. Therefore, the contents of Ta and W are each preferably 0.10% or less. No particular limitation is imposed on the lower limits of the contents of Ta and W. However, Ta and W form fine carbides, nitrides, or carbonitrides during hot rolling or continuous annealing to thereby increase the strength of the steel sheet, so that the contents of Ta and W are each more preferably 0.01% or more. Therefore, when Ta and W are contained, their contents are each 0.10% or less. The lower limits of the contents of Ta and W contained are each more preferably 0.01% or more. The upper limits of the contents of Ta and W contained are each more preferably 0.08% or less.

When the content of B is 0.0100% or less, cracks do not occur in the steel sheet during casting or hot rolling, and the deformability of the steel sheet does not deteriorate, so that the EL does not deteriorate. Therefore, the content of B is preferably 0.0100% or less. No particular limitation is imposed on the lower limit of the content of B. However, since B is an element that segregates at austenite grain boundaries during annealing and increases the hardenability, the lower limit of the content of B is more preferably 0.0003% or more. Therefore, when B is contained, its content is 0.0100% or less. The lower limit of B contained is more preferably 0.0003% or more. The upper limit of B contained is more preferably 0.0080% or less.

When the contents of Cr, Mo, and Ni are each 1.00% or less, the amount of coarse precipitates and inclusions does not increase, and the ultimate deformation ability of the steel sheet does not deteriorate, so that the bendability does not deteriorate. Therefore, the contents of Cr, Mo, and Ni are each preferably 1.00% or less. No particular limitation is imposed on the lower limits of the contents of Cr, Mo, and Ni. However, since Cr, Mo, and Ni are elements that improve the hardenability, the contents of Cr, Mo, and Ni are each preferably 0.01% or more. Therefore, when Cr, Mo, and Ni are contained, their contents are each 1.00% or less. The lower limits of the contents of Cr, Mo, and Ni contained are each more preferably 0.01% or more. The upper limits of the contents of Cr, Mo, and Ni contained are each more preferably 0.80% or less.

When the content of Co is 1.000% or less, the amount of coarse precipitates and inclusions does not increase, and the ultimate deformation ability of the steel sheet does not deteriorate, so that the bendability does not deteriorate. Therefore, the content of Co is preferably 1.000% or less. No particular limitation is imposed on the lower limit of the content of Co. However, since Co is an element that improves the hardenability, the content of Co is more preferably 0.001% or more. Therefore, when Co is contained, its content is 1.000% or less. The lower limit of the content of Co contained is more preferably 0.001% or more. The upper limit of the content of Co contained is more preferably 0.800% or less.

When the content of Cu is 1.00% or less, the amount of coarse precipitates and inclusions does not increase, and the ultimate deformation ability of the steel sheet does not deteriorate, so that the bendability does not deteriorate. Therefore, the content of Cu is preferably 1.00% or less. No particular limitation is imposed on the lower limit of the content of Cu. However, since Cu is an element that improves the hardenability, the content of Cu is more preferably 0.01% or more. Therefore, when Cu is contained, its content is 1.00% or less. The lower limit of the content of Cu contained is more preferably 0.01% or more. The upper limit of the content of Cu contained is more preferably 0.80% or less.

When the content of Sn is 0.200% or less, cracks do not occur in the steel sheet during casting or hot rolling, and the deformability of the steel sheet does not deteriorate, so that the EL does not deteriorate. Therefore, the content of Sn is preferably 0.200% or less. No particular limitation is imposed on the lower limit of the content of Sn. However, since Sn is an element that improves the hardenability, the lower limit of the content of Sn is more preferably 0.001% or more. Therefore, when Sn is contained, its content is 0.200% or less. The lower limit of the content of Sn contained is more preferably 0.001% or more. The upper limit of the content of Sn contained is more preferably 0.100% or less.

When the content of Sb is 0.200% or less, the amount of coarse precipitates and inclusions does not increase, and the ultimate deformation ability of the steel sheet does not deteriorate, so that the bendability does not deteriorate. Therefore, the content of Sb is preferably 0.200% or less. No particular limitation is imposed on the lower limit of the content of Sb. However, since Sb is an element that can control the thickness of a softened surface layer to adjust the strength, the content of Sb is more preferably 0.001% or more. Therefore, when Sb is contained, its content is 0.200% or less. The lower limit of the content of Sb contained is more preferably 0.001% or more. The upper limit of the content of Sb contained is more preferably 0.100% or less.

When the contents of Ca, Mg, and REMs are each 0.0100% or less, the amount of coarse precipitates and inclusions does not increase, and the ultimate deformation ability of the steel sheet does not deteriorate, so that the bendability does not deteriorate. Therefore, the contents of Ca, Mg, and REMs are each preferably 0.0100% or less. No particular limitation is imposed on the lower limits of the contents of Ca, Mg, and REMs. However, since Ca, Mg, and REMs are elements that spheroidize nitrides and sulfides and improve the deformability of the steel sheet, the contents of Ca, Mg, and REMs are each more preferably 0.0005% or more. When Ca, Mg, and REMs are contained, their contents are each 0.0100% or less. The lower limits of the contents of Ca, Mg, and REMs contained are each more preferably 0.0005% or more. The upper limits of the contents of Ca, Mg, and REMs contained are each more preferably 0.0050% or less.

When the contents of Zr and Te are each 0.100% or less, the amount of coarse precipitates and inclusions does not increase, and the ultimate deformation ability of the steel sheet does not deteriorate, so that the bendability does not deteriorate. Therefore, the contents of Zr and Te are each preferably 0.100% or less. No particular limitation is imposed on the lower limits of the contents of Zr and Te. However, since Zr and Te are elements that spheroidize nitrides and sulfides and improve the ultimate deformation ability of the steel sheet, their contents are each more preferably 0.001% or more. Therefore, when Zr and Te are contained, their contents are each 0.100% or less. The lower limits of the contents of Zr and Te contained are each more preferably 0.001% or more. The upper limits of the contents of Zr and Te contained are each more preferably 0.080% or less.

When the content of Hf is 0.10% or less, the amount of coarse precipitates and inclusions does not increase, and the ultimate deformation ability of the steel sheet does not deteriorate, so that the bendability does not deteriorate. Therefore, the content of Hf is preferably 0.10% or less. No particular limitation is imposed on the lower limit of the content of Hf. However, since Hf is an element that spheroidizes nitrides and sulfides and improves the ultimate deformation ability of the steel sheet, the content of Hf is more preferably 0.01% or more. Therefore, when Hf is contained, its content is 0.10% or less. The lower limit of the content of Hf contained is more preferably 0.01% or more. The upper limit of the content of Hf contained is more preferably 0.08% or less.

When the content of Bi is 0.200% or less, the amount of coarse precipitates and inclusions does not increase, and the ultimate deformation ability of the steel sheet does not deteriorate, so that the bendability does not deteriorate. Therefore, the content of Bi is preferably 0.200% or less. No particular limitation is imposed on the lower limit of the content of Bi. However, since Bi is an element that reduces the degree of segregation, its content is more preferably 0.001% or more. Therefore, when Bi is contained, its content is 0.200% or less. The lower limit of the content of Bi contained is more preferably 0.001% or more. The upper limit of the content of Bi contained is more preferably 0.100% or less.

If the contents of Ti, Nb, V, Ta, W, B, Cr, Mo, Ni, Co, Cu, Sn, Sb, Ca, Mg, REMs, Zr, Te, Hf, and Bi described above are less than their preferred lower limits, the effects of the invention are not impaired, and they are contained as incidental impurities.

Next, the steel microstructure of the high-strength coated steel sheet of the invention will be described.

Area fraction of ferrite: 1% or more and 30% or less

To obtain sufficient ductility, the area fraction of ferrite must be 1% or more. To obtain a TS of 1180 MPa or more, the area fraction of soft ferrite must be 30% or less. The ferrite as used herein means polygonal ferrite, granular ferrite, and acicular ferrite and is relatively soft ferrite with high ductility. The lower limit of the area fraction is preferably 3% or more. The upper limit of the area fraction is preferably 25% or less.

Area fraction of fresh martensite: 1% or more and 15% or less

To achieve a TS of 1180 MPa or more, the area fraction of fresh martensite must be 1% or more. To obtain excellent bendability, the area fraction of the fresh martensite must be 15% or less. The lower limit is preferably 3% or more. The upper limit is preferably 12% or less.

Total area fraction of bainite and tempered martensite: 35% or more and 90% or less

Bainite and tempered martensite are microstructures effective in increasing bendability. If the total area fraction of bainite and tempered martensite is less than 35%, excellent bendability is not obtained. Therefore, the total area fraction of bainite and tempered martensite must be 35% or more. If the total area fraction of bainite and tempered martensite exceeds 90%, the desired retained austenite that is responsible for ductility is not obtained, so that excellent ductility is not obtained. Therefore, the total area fraction of bainite and tempered martensite must be 90% or less. The lower limit of the total area fraction is preferably 45% or more. The upper limit of the total area fraction is preferably 85% or less.

To determine the area fractions of ferrite, fresh martensite, tempered martensite, and bainite, a cross section (L cross section) of the steel sheet parallel to the rolling direction is polished and then etched with 3% by volume nital. Subsequently, the cross section is observed using an SEM (scanning electron microscope) at a magnification of 2000X at a position 1/4 of the sheet thickness (a position corresponding to a position 1/4 of the sheet thickness from the surface of the steel sheet in the depth direction). Specifically, the cross section is observed at 10 viewing areas. The obtained microstructure images of the 10 viewing areas are used to calculate the area fractions of the microstructures (ferrite, fresh martensite, tempered martensite, and bainite) using Image-Pro manufactured by Media Cybernetics, and the values obtained are averaged to determine the area fractions. In the microstructure images, ferrite is observed as a gray microstructure (base microstructure), and fresh martensite is observed as a white microstructure. Tempered martensite is observed as a grey internal microstructure present inside white martensite, and bainite is observed as a dark grey microstructure including many linear grain boundaries.

Area fraction of retained austenite: 6% or more

To obtain sufficient ductility, the area fraction of retained austenite must be 6% or more. The area fraction of retained austenite is preferably 8% or more and more preferably 10% or more.

The area fraction of retained austenite was measured as follows. The steel sheet was polished to a surface 0.1 mm from the position 1/4 of the thickness and then further polished by 0.1 mm by chemical polishing, and the resulting surface was used for the measurement. Specifically, the CoKα line from an X-ray diffractometer was used to measure the integrated intensity ratios of the diffraction peaks of {200}, {220}, and {311} planes of fcc iron and {200}, {211}, and {220} planes of bcc iron, and the obtained 9 integrated intensity ratios were averaged to determine the area fraction of retained austenite.

Value obtained by dividing average amount (% by mass) of Mn in retained austenite grains having aspect ratio of 2.0 or more by average amount (% by mass) of Mn in ferrite: 1.1 or more

In the present invention, the value obtained by dividing the average amount (% by mass) of Mn in retained austenite grains having an aspect ratio of 2.0 or more by the average amount (% by mass) of Mn in ferrite is 1.1 or more, and this is an extremely important constituent factor of the invention. To obtain excellent ductility, it is necessary that the area fraction of stable retained austenite in which Mn is concentrated be high. The above value is preferably 1.2 or more.

The higher the average concentration of Mn in the retained austenite, the further the ductility is improved. Therefore, no particular limitation is imposed on the upper limit of the above value. However, if the above value exceeds 10.0, the effect of improving the ductility is saturated. Therefore, the above value is preferably 10.0 or less.

The amounts of C and Mn in retained austenite and ferrite are determined using an FE-EPMA (Field Emission-Electron Probe Micro Analyzer). Specifically, in a cross section in the rolling direction at a position 1/4 of the thickness, the distribution states of C and Mn in each phase are quantified, and the amounts of C and Mn can be determined using the average values of the results of the analysis of the amounts of C and Mn in 30 retained austenite grains and 30 ferrite grains.

To distinguish retained austenite from martensite, an SEM (Scanning Electron Microscope) and EBSD (Electron Backscattered Diffraction) are used to observe the same viewing area. Next, EBSD Phase Map identification is used to identify retained austenite in the SEM image. The aspect ratios of retained austenite grains can be determined using Photoshop elements 13. Specifically, ellipses circumscribing the retained austenite grains are drawn, and their major axis lengths are divided by the minor axis length to calculate the aspect ratios. The average of the aspect ratios of 30 retained austenite grains is determined.

The average equivalent circular diameter of the retained austenite grains was determined by measuring the areas of 30 retained austenite grains using Image-Pro manufactured by Media Cybernetics, calculating their equivalent circular diameters, and averaging the equivalent circular diameters.

$Mn^{\gamma}_{eq.}$: 5.0 or more

In the present invention, $Mn^{\gamma}_{eq.}$ is 5.0 or more, and this is an extremely important constituent factor of the invention. $Mn^{\gamma}_{eq.}$ is a parameter effective in improving the stability of retained austenite, preventing the decomposition of the retained austenite during coating treatment, and obtaining excellent post-coating treatment ductility. If $Mn^{\gamma}_{eq.}$ is less than 5.0, the stability of the retained austenite deteriorates, and the post-coating treatment ductility deteriorates. No particular limitation is imposed on the upper limit of $Mn^{\gamma}_{eq.}$. However, when the retained austenite is stabilized excessively, the TRIP effect is not obtained, so that $Mn^{\gamma}_{eq.}$ is preferably 250 or less. $Mn^{\gamma}_{eq.}$ is more preferably 10.0 or more and 200 or less. $Mn^{\gamma}_{eq.}$ is calculated from the following formula (1).

$$Mn^{\gamma}_{eq.} = \{\ln([C]\gamma - 0.2) + \ln([Mn]\gamma - 2.6) + 4.30\} \times \lambda\gamma/D\gamma \tag{1}$$

Here, $[C]\gamma$ and $[Mn]\gamma$ are the average amount (% by mass) of C and the average amount of Mn (% by mass), respectively, that are averaged over all the retained austenite grains.

$\lambda\gamma$ is the average aspect ratio of all the retained austenite grains.

$D\gamma$ is the average equivalent circular diameter ($\mu$m) of all the retained austenite grains.

$\delta_{LME}$: 1.0 or less

In the present invention, $\delta_{LME}$ is 1.0 or less, and this is an extremely important constituent factor of the invention. $\delta_{LME}$ is a parameter that is determined by the concentrations of C, Si, and Mn contained in the steel sheet and is effective in reducing the sensitivity to LME cracking during spot welding and obtaining excellent LME resistance. If $\delta_{LME}$ is more than 1.0, the sensitivity to LME cracking of the steel sheet is high, and cracking tends to occur during welding, so that the LME resistance deteriorates. No particular limitation is imposed on the lower limit of $\delta_{LME}$. However, if the amounts of C, Si, and Mn are such that $\delta_{LME}$ determined thereby is less than 0.2, the TS may not be 1180 MPa or more. Therefore, $\delta_{LME}$ is preferably 0.2 or more. The lower limit of $\delta_{LME}$ is more preferably 0.3 or more. The upper limit of $\delta_{LME}$ is more preferably 0.9 or less. $\delta_{LME}$ is calculated from the following formula (2).

$$\delta_{LME} = 1 / 2 \times \log\{(1 + [C]) / (0.35 - [C])\} + \{\exp([Si] / 3.23) - 1\} + \{\exp([Mn] / 22) - 1\} \qquad (2)$$

Here, [C], [Si], and [Mn] are the amount (% by mass) of C, the amount (% by mass) of Si, and the amount (% by mass) of Mn, respectively, with respect to the total amount of the steel sheet.

Value obtained by dividing total amount C in all retained austenite grains by amount of C in $T_0$ microstructure: less than 1.0

The $T_0$ composition is a composition at which the free energy of fcc and the free energy of bcc are equal to each other at a given temperature. Austenite is fcc, and ferrite and bainite are each bcc. When the total amount of C in all the retained austenite grains is lower than the amount of C at the $T_0$ composition at which the free energy of fcc is equal to the free energy of bcc, the hardness after martensite transformation due to deformation of retained austenite becomes low. In this case, the difference in hardness from the soft phase is reduced, and better bendability is obtained. Therefore, the value obtained by dividing the total amount of C in all the retained austenite grains by the amount of C at the $T_0$ composition is preferably less than 1.0. No particular limitation is imposed on the lower limit of the value. However, if the value obtained by dividing the total amount of C in all the retained austenite grains by the amount of C at the $T_0$ composition is less than 0.1, the stability of the retained austenite itself deteriorates, and excellent ductility may not be obtained. Therefore, the value is preferably 0.1 or more. The lower limit of the value is more preferably 0.2 or more. The upper limit of the value is still more preferably 0.9 or less.

The total amount of C in all the retained austenite grains is calculated from formulas [1] and [2] below using the amount of shift of a diffraction peak corresponding to a (220) plane measured with an X-ray diffractometer using the CoK$\alpha$ line.

$$a = 1.7889 \times \sqrt{2} / \sin \theta \qquad [1]$$

$$a = 3.578 + 0.033 [C] + 0.00095 [Mn] \qquad [2]$$

In formulas [1] and [2], a is the lattice constant (Å) of austenite, and $\theta$ is a value (rad) obtained by dividing the diffraction peak angle corresponding to the (220) plane by 2. In formula [2], [M] is the % by mass of the element M in all the austenite grains. In the present invention, the % by mass of the element M with respect to the total amount of the steel is used as the % by mass of the element M in the retained austenite.

The amount of C at the $T_0$ composition can be uniquely calculated from the components of the steel and their contents using integrated thermodynamic calculation software Thermo-Calc with the TCFE7 database. The calculated $T_0$ composition is a composition calculated at a reheating temperature in the range of higher than or equal to Ms' and lower than or equal to Ms' + 350°C immediately before immersion in a galvanization bath. Here, the details of Ms' will be described later in the description of a production method.

The steel microstructure in the invention may include, in addition to ferrite, fresh martensite, bainite, tempered martensite, and retained austenite, pearlite and carbides such as cementite at an area fraction of 10% or less. Even in this case, the effects of the invention are not impaired.

The above-described high-strength coated steel sheet may include, as the coated layer, an Al-based coated layer including an Al-Ni-based coated layer, but the coated layer is preferably a galvanized layer. The galvanized layer may be a galvannealed layer subjected to galvannealing treatment.

Next, the production method of the invention will be described.

Heating temperature of steel slab

In the present invention, no particular limitation is imposed on the heating temperature of the slab, but the heating temperature is preferably 1100°C or higher and 1300°C or lower. Precipitates present in the step of heating the steel slab will remain as coarse precipitates in the finally obtained steel sheet and do not contribute to the strength. It is therefore preferable to re-dissolve Ti- and Nb-based precipitates formed during casting. Therefore, the heating temperature of the steel slab is preferably 1100°C or higher. Also, from the viewpoint of obtaining a smooth steel sheet surface by scaling-off defects such as blow holes and segregation in the surface layer of the slab to reduce cracks and irregularities on the steel sheet surface, it is preferable that the heating temperature of the steel slab is 1100°C or higher. If the heating temperature of the steel slab is higher than 1300°C, scale loss increases as the amount of oxidation increases. Therefore, the heating temperature of the steel slab is preferably 1300°C or lower. The heating temperature is more preferably 1150°C or higher and 1250°C or lower.

Preferably, the steel slab is produced by continuous casting in order to prevent macro segregation. However, the steel slab may be produced by ingot casting, thin slab casting, etc. After the production of the steel slab, a conventional method may be used to cool the steel slab to room temperature and then reheat the steel slab. Moreover, an energy saving process such as hot direct rolling can be used without any problem. In the hot direct rolling, the slab is not cooled to room temperature, and the hot slab is charged into a heating furnace or the slab subjected to heat retention treatment for a short time is immediately hot-rolled. The slab may be subjected to rough rolling under ordinary conditions to form a sheet bar. When the heating temperature is set to be low, it is preferable that the sheet bar is heated before finish rolling using, for example, a bar heater, from the viewpoint of preventing troubles during hot rolling.

Finish rolling delivery temperature of hot rolling: 750°C or higher and 1000°C or lower

The heated steel slab is subjected to hot rolling including rough rolling and finish rolling to form a hot rolled steel sheet. In this case, if the finishing temperature exceeds 1000°C, the amount of oxides (scales) formed increases abruptly, and the interfaces between the steel substrate and the oxides are roughened, so that the surface quality after pickling and cold rolling tends to deteriorate. If hot rolling scales partially remain after pickling, these scales adversely affect ductility and flangeability. Moreover, the size of crystal grains increases excessively, and this may cause roughening of the surface of a pressed product during working. If the finishing temperature is lower than 750°C, the rolling load is large, and the loading burden increases. Moreover, the rolling reduction in a state in which austenite is unrecrystallized increases. Therefore, an abnormal texture develops, resulting in significant in-plane anisotropy in the final product. In this case, not only does the homogeneity of the material quality (the stability of the material quality) deteriorate, but also the ductility itself deteriorates. Therefore, the finish rolling delivery temperature of hot rolling must be 750°C or higher and 1000°C or lower. The lower limit is preferably 800°C or higher. The upper limit is preferably 950°C or lower.

Coiling temperature after hot rolling: 300°C or higher and 750°C or lower

If the coiling temperature after hot rolling exceeds 750°C, the diameters of the crystal grains of ferrite in the hot rolled steel sheet microstructure are large, and it is difficult for the final annealed steel sheet to have the desired strength. If the coiling temperature after hot rolling is lower than 300°C, the strength of the hot rolled steel sheet becomes high. In this case, the rolling load for cold rolling increases, and the steel sheet may have a defective shape, so that the productivity decreases. Therefore, the coiling temperature after hot rolling must be 300°C or higher and 750°C or lower. The lower limit is preferably 400°C or higher. The upper limit is preferably 650°C or lower.

Rough-rolled steel sheets may be joined together during hot rolling, and then finish rolling may be performed continuously. The rough-rolled steel sheets may be temporarily coiled. To reduce the rolling load during the hot rolling, part or all of the finish rolling may be performed as lubrication rolling. The lubrication rolling is also effective from the viewpoint of making the shape and material properties of the steel sheet uniform. The coefficient of friction during the lubrication rolling is preferably 0.10 or more and 0.25 or less.

Thus-produced hot rolled steel sheet is optionally subjected to pickling. The pickling allows removal of oxides from the surface of the steel sheet, and it is preferable to perform the pickling to allow the high-strength coated steel sheet used as the final product to have excellent chemical convertibility and to ensure excellent coating quality. The pickling may be performed once or repeatedly in a plurality of passes.

Holding in a temperature range of lower than or equal to $Ac_1$ transformation temperature for longer than 1800 s

When the steel sheet to be subjected to subsequent cold rolling is held in a temperature range of lower than or equal to the $Ac_1$ transformation temperature for longer than 1800 s, the steel sheet can be softened. This holding process is performed optionally. If the steel sheet is held in a temperature range of higher than the $Ac_1$ transformation temperature, austenite is formed from grain boundaries, and the amount of retained austenite grains with a small aspect ratio may increase. In this case, the stability of the retained austenite decreases, so that the post-coating treatment ductility may decrease. If the steel sheet is held for 1800 s or shorter, strain after hot rolling cannot be removed, and the steel sheet may not be softened.

The heat treatment method may be any annealing method such as continuous annealing or batch annealing. After the heat treatment described above, the steel sheet is cooled to room temperature. No particular limitation is imposed on the cooling method and the cooling rate, and any cooling method may be used such as furnace cooling or natural cooling in batch annealing or gas jet cooling, mist cooling, or water cooling in continuous annealing. When pickling treatment is performed, a routine procedure may be used.

Cold rolling

After the coiling and optional pickling, cold rolling is performed. If the cold rolling is performed at a rolling reduction ratio of more than 50%, retained austenite to be formed in the subsequent annealing step may have a small grain diameter, and the concentration of C in the retained austenite may become significantly high. In this case, the hardness increases, and the bendability decreases. Moreover, Mn is not concentrated in retained austenite grains having an aspect ratio of 2.0 or more, and the ductility decreases. Therefore, the rolling reduction ratio is 50% or less. The lower limitation is preferably 5% or more and more preferably 10% or more. The upper limitation is preferably 45% or less and more preferably 40% or less.

Holding in a temperature range of higher than or equal to Ac$_3$ transformation temperature - 50°C for 20 s or longer and 1800 s or shorter (corresponding to first annealing treatment of cold rolled steel sheet in Examples)

If the steel sheet is held in a temperature range of lower than the Ac$_3$ transformation temperature - 50°C, Mn is concentrated in austenite, and martensite transformation does not occur during cooling, so that nuclei for retained austenite grains having a large aspect ratio cannot be obtained. As a result, in the subsequent annealing step (corresponding to the second annealing treatment of the cold rolled steel sheet in Examples), retained austenite is formed from grain boundaries, and the amount of retained austenite grains with a small aspect ratio increases. In this case, the stability of the retained austenite decreases, and therefore the ductility and the post-coating treatment ductility deteriorate.

No particular limitation is imposed on the upper limit of the annealing temperature. If the steel sheet is held in a temperature range of higher than the Ac$_3$ transformation temperature + 300°C, the diffusion of carbon in austenite is facilitated, and the carbon escapes from the surface layer, so that the desired microstructure may not be obtained. Therefore, the annealing temperature is preferably lower than or equal to the Ac$_3$ transformation temperature + 300°C.

If the steel sheet is held for shorter than 20 s, recrystallization is insufficient, and the desired microstructure cannot be obtained, so that the ductility deteriorates. If the steel sheet is held for longer than 1800 **s,** Mn is excessively concentrated on the surface. In this case, not only does the coating quality deteriorate, but also the austenite grains coarsen during annealing, so that the nuclei for retained austenite to be formed in the subsequent cooling process also coarsen. As a result, in the subsequent annealing step (corresponding to the second annealing treatment of the cold-rolled sheet in the Examples), retained austenite is formed from grain boundaries, and the amount of retained austenite grains with a small aspect ratio increases. In this case, the stability of the retained austenite decreases, and therefore the ductility and the post-coating treatment ductility deteriorate.

Cooling to cooling stop temperature of lower than or equal to martensite start temperature

If the cooling stop temperature is higher than the martensite start temperature, the amount of martensite formed by transformation is small, and all of the untransformed austenite may undergo martensite transformation during final cooling, so that nuclei for retained austenite grains having a large aspect ratio cannot be obtained. As a result, in the subsequent annealing step (corresponding to the second annealing treatment of the cold rolled steel sheet in Examples), retained austenite is formed from grain boundaries, and the amount of retained austenite grains with a small aspect ratio increases. In this case, the stability of the retained austenite decreases, and therefore the ductility and the post-coating treatment ductility deteriorate. The cooling stop temperature is preferably higher than or equal to the martensite start temperature - 250°C and lower than or equal to the martensite start temperature - 50°C.

Reheating to reheating temperature in a range of higher than or equal to Bs - 150°C and lower than or equal to Bs + 150°C, then holding at the reheating temperature for 2 s or longer and 1800 s or shorter, and cooling to room temperature

If the reheating temperature is lower than Bs - 150°C, C is excessively concentrated in retained austenite to be formed in the subsequent annealing step (corresponding to the second annealing treatment of the cold rolled steel sheet in Examples), and bendability deteriorates. Moreover, Mn is not concentrated in retained austenite grains having a large aspect ratio, and the ductility deteriorates. If the reheating temperature is higher than Bs + 150°C, the nuclei for retained austenite grains with a large aspect ratio decompose, and the amount of retained austenite grains with a small aspect ratio increases, so that the desired microstructure is not obtained. Therefore, the ductility and the post-coating treatment ductility deteriorate. Similarly, if the steel sheet is held for shorter than 2 s, nuclei for retained austenite grains with a large aspect ratio cannot be obtained, and the desired microstructure cannot be obtained, so that the ductility and the post-coating treatment ductility deteriorate. If the steel sheet is held for longer than 1800 s, the nuclei for retained austenite grains with a large aspect ratio decompose, and the amount of retained austenite grains with a small aspect ratio increases, so that the desired microstructure is not obtained. Therefore, the ductility and the post-coating treatment ductility deteriorate. Bs is a temperature (°C) determined from the following formula (3).

$$Bs = 732 - 202 \times [C] - 108 \times [Si] - 85 \times [Mn] - 39 \times [Mo] \tag{3}$$

[C], [Si], [Mn], and [Mo] are the amount (% by mass) of C, the amount (% by mass) of Si, the amount (% by mass) of Mn, and the amount (% by mass) of Mo, respectively, with respect to the total amount of the steel sheet and are each zero when the corresponding element is not contained.

After the reheated steel sheet is held for the prescribed time, the resulting steel sheet is temporarily cooled to room temperature. No particular limitation is imposed on the cooling method, and a well-known method may be used.

Heating rate in a temperature range of from $Ac_1$ transformation temperature - 150°C to $Ac_1$ transformation temperature: 2°C/s or more

If the steel sheet is heated to a temperature range of from the $Ac_1$ transformation temperature - 150°C to the $Ac_1$ transformation temperature at a heating rate of less than 2°C/s, the nuclei for the fine and stable retained austenite decompose. As a result, in the subsequent annealing step (corresponding to the second annealing treatment of the cold-rolled steel sheet in Examples), retained austenite is formed from grain boundaries, and the amount of retained austenite grains with a small aspect ratio increases. In this case, the stability of the retained austenite decreases, and therefore the ductility and the post-coating treatment ductility deteriorate. No particular limitation is imposed on the upper limit of the heating rate. However, if the heating rate exceeds 200°C/s, an excessively large amount of fine austenite is formed. In this case, the concentration of C in the retained austenite increases significantly. Therefore, the hardness increases, and the bendability decreases. Therefore, the heating rate is preferably 200°C/s or less. The lower limit is more preferably 3°C/s or more. The upper limit is still more preferably 150°C/s or less.

Holding in a temperature range of higher than or equal to $Ac_1$ transformation temperature for 20 s or longer and 600 s or shorter (corresponding to second annealing treatment of cold-rolled steel sheet in Examples)

In the present invention, the steel sheet is held in a temperature range of higher than or equal to the $Ac_1$ transformation temperature for 20 s or longer and 600 s or shorter, and this is an extremely important constituent factor of the invention. If the steel sheet is held in a temperature range of lower than the $Ac_1$ transformation temperature, the amount of ferrite is excessively large, and retained austenite is not obtained. The above temperature is preferably higher than or equal to the $Ac_1$ transformation temperature + 20°C and more preferably higher than or equal to the $Ac_1$ transformation temperature + 30°C and lower than or equal to the $Ac_3$ transformation temperature. If the steel sheet is held for shorter than 20 s, Mn is not concentrated in austenite. In this case, not only is stable retained austenite not obtained, but also the amount of quenched martensite after the final cooling is excessively large, so that bendability and ductility deteriorate. If the steel sheet is held for longer than 600 s, austenite coarsens during annealing. In this case, the stability of austenite decreases, and the desired amount of retained austenite is not obtained, so that excellent post-coating treatment ductility cannot be obtained.

Cooling to cooling stop temperature of lower than or equal to Ms'

If the cooling stop temperature is higher than Ms', the amount of martensite formed by transformation is small, and the amount of martensite to be tempered in the subsequent reheating is small, so that the desired amount of tempered martensite is not obtained. The cooling stop temperature is preferably higher than or equal to Ms' - 250°C and lower than or equal to the martensite start temperature - 30°C.

Here, Ms' is a temperature (°C) calculated from the following formula (4). $Mn^{\gamma}_{eq.}$ is calculated from formula (1) above.

$$Ms' = Ms \times 15 / Mn^{\gamma}_{eq.} \tag{4}$$

Ms is the martensite start temperature (°C), and $Mn^{\gamma}_{eq.} = 15$ when $Mn^{\gamma}_{eq.} < 15$.

Reheating to reheating temperature in a range of higher than or equal to Ms' and lower than or equal to Ms' + 350°C, then holding at the reheating temperature for 2 s or longer and 600 s or shorter, performing coating treatment, and then cooling to room temperature

If the steel sheet is reheated at a temperature lower than Ms', fresh martensite is not tempered, and the desired microstructure is not obtained. If the reheating temperature is higher than Ms' + 350°C, bainite transformation is delayed, and the desired microstructure is not obtained. If the steel sheet is held for shorter than 2 s, the bainite transformation does not proceed sufficiently, and the desired microstructure is not obtained. If the steel sheet is held for longer than 600 s, carbides are precipitated during bainite transformation, and the amount of C in the retained austenite decreases, so that the desired microstructure is not obtained.

After the steel sheet is held at the above temperature for the prescribed time, the steel sheet is subjected to coating treatment and cooled to room temperature. No particular limitation is imposed on the cooling method after the coating treatment, and a well-known method may be used.

Coating treatment

Examples of the coating treatment include galvanizing treatment and Al-based coating treatment including Al-Ni coating treatment. The coating treatment is preferably galvanizing treatment that includes hot-dip galvanizing treatment and electrogalvanizing treatment. When hot-dip galvanizing treatment is performed, the steel sheet subjected to the annealing treatment is immersed in a galvanization bath at 440°C or higher and 500°C or lower to perform the hot-dip galvanizing treatment, and then the coating weight is adjusted, for example, by gas wiping. Preferably, a galvanization bath containing Al in an amount of 0.08% or more and 0.30% or less is used for the hot-dip galvanization.

When the hot-dip galvanized steel sheet is subjected to galvannealing treatment, the steel sheet subjected to the hot-dip galvanizing treatment is subjected to galvannealing treatment in a temperature range of 450°C or higher and 600°C or lower. If the galvannealing treatment is performed at a temperature higher than 600°C, untransformed austenite transforms to pearlite, and the desired area fraction of retained austenite is not obtained, so that the ductility may deteriorate. Therefore, when the galvannealing treatment is performed, it is preferable that the galvannealing treatment is performed in a temperature range of higher than or equal to 450°C and lower than or equal to 600°C.

No particular limitation is imposed on the other conditions for the production method. However, from the viewpoint of productivity, it is preferable to perform the annealing in a continuous annealing facility. Preferably, the series of processes including annealing, hot-dip galvanization, galvannealing treatment, etc. is performed in a CGL (continuous galvanizing line) that is a hot-dip galvanization line.

The "high-strength coated steel sheet" described above may be subjected to skin pass rolling for the purpose of shape correction, adjustment of surface roughness, etc. The rolling reduction of the skin pass rolling is preferably in the range of 0.1% or more and 2.0% or less. If the rolling reduction is less than 0.1%, the effect of the skin pass rolling is small, and the skin pass rolling is difficult to control. Therefore, this is the lower limit of the preferred range. If the rolling reduction exceeds 2.0%, the productivity deteriorates significantly, and this is used as the upper limit of the preferred range. The skin pass rolling may be performed on-line or off-line. The skin pass may be performed in a single pass to achieve the target rolling reduction ratio or may be divided into several passes. Various types of coating treatment such as resin coating or oil coating may be performed.

EXAMPLES

Steel ingots having chemical compositions shown in Tables 1 and 2 with the balance being Fe and incidental impurities were produced using converters and then subjected to continuous casting to obtain slabs. The slabs obtained were reheated to 1250°C, and hot-dip galvanized (GI) steel sheets and hot-dip galvannealed (GA) steel sheets were obtained under conditions shown in Tables 3 and 4. The thickness of each of the GI and GA sheets was 1.0 mm or more and 1.8 mm or less. The hot-dip galvanizing bath used for the hot-dip galvanized (GI) steel sheets was a zinc bath containing Al: 0.19% by mass, and the hot-dip galvanizing bath used for the hot-dip galvannealed (GA) steel sheets was a zinc bath containing Al: 0.14% by mass. The temperature of each bath was 465°C. The coating weight per side was 45 g/m$^2$ (double-sided coating). As for the GA steel sheets, the concentration of Fe in the coated layer was adjusted to 9% by mass or more and 12% by mass or less. The steel microstructure of a cross section of each of the obtained steel sheets was observed using the method described above to examine tensile properties, bendability, and LME resistance, and the results are shown in Tables 5 to 8.

[Table 1]

| Steel type | Chemical composition (% by mass) | | | | | | | | | | | | | | | | | | | | | | | | | | | | Remarks |
|---|---|---|---|---|---|---|---|---|---|---|---|---|---|---|---|---|---|---|---|---|---|---|---|---|---|---|---|---|---|
| | C | Si | Mn | P | S | N | Al | O | Ti | Nb | V | W | B | Ni | Cr | Mo | Co | Cu | Sn | Sb | Ta | Ca | Mg | Zr | Te | Hf | Bi | REMs | |
| A | 0.167 | 0.78 | 3.51 | 0.023 | 0.0024 | 0.0035 | 0.030 | 0.0029 | 0.028 | - | - | - | - | - | - | - | - | - | - | - | - | - | - | - | - | - | - | - | Inventive steel |
| B | 0.185 | 0.91 | 2.81 | 0.009 | 0.0010 | 0.0040 | 0.048 | 0.0022 | 0.030 | - | - | - | - | - | - | - | - | - | - | - | - | - | - | - | - | - | - | - | Inventive steel |
| C | 0.140 | 1.12 | 3.11 | 0.017 | 0.0018 | 0.0023 | 0.035 | 0.0003 | 0.051 | - | - | - | - | - | - | - | - | - | - | - | - | - | - | - | - | - | - | - | Inventive steel |
| D | 0.290 | 0.50 | 2.80 | 0.028 | 0.0010 | 0.0026 | 0.057 | 0.0023 | - | - | - | - | - | - | - | - | - | - | - | - | - | - | - | - | - | - | - | - | Inventive steel |
| E | 0.049 | 0.98 | 3.21 | 0.028 | 0.0026 | 0.0025 | 0.028 | 0.0031 | - | - | - | - | - | - | - | - | - | - | - | - | - | - | - | - | - | - | - | - | Inventive steel |
| F | 0.034 | 1.75 | 0.20 | 0.026 | 0.0018 | 0.0025 | 0.034 | 0.0018 | 0.026 | - | - | - | - | - | - | - | - | - | - | - | - | - | - | - | - | - | - | - | Inventive steel |
| G | 0.198 | 0.59 | 3.53 | 0.034 | 0.0019 | 0.0033 | 0.038 | 0.0040 | 0.050 | - | - | - | - | - | - | - | - | - | - | - | - | - | - | - | - | - | - | - | Inventive steel |
| H | 0.079 | 0.88 | 3.21 | 0.023 | 0.0026 | 0.0032 | 0.044 | 0.0032 | - | - | - | - | - | - | - | - | - | - | - | - | - | - | - | - | - | - | - | - | Inventive steel |
| I | 0.085 | 1.48 | 1.54 | 0.018 | 0.0019 | 0.0024 | 0.036 | 0.0012 | - | - | - | - | - | - | - | - | - | - | - | - | - | - | - | - | - | - | - | - | Inventive steel |
| J | 0.161 | 0.20 | 3.51 | 0.026 | 0.0022 | 0.0037 | 0.030 | 0.0016 | 0.043 | - | - | - | - | - | - | - | - | - | - | - | - | - | - | - | - | - | - | - | Inventive steel |
| K | 0.124 | 0.36 | 5.96 | 0.027 | 0.0026 | 0.0031 | 0.030 | 0.0017 | 0.049 | - | - | - | - | - | - | - | - | - | - | - | - | - | - | - | - | - | - | - | Inventive steel |
| L | 0.190 | 0.42 | 1.23 | 0.024 | 0.0024 | 0.0030 | 0.035 | 0.0003 | - | - | - | - | - | - | - | - | - | - | - | - | - | - | - | - | - | - | - | - | Inventive steel |
| M | 0.154 | 0.59 | 4.16 | 0.022 | 0.0028 | 0.0031 | 0.037 | 0.0011 | - | - | - | - | - | - | - | - | - | - | - | - | - | - | - | - | - | - | - | - | Inventive steel |
| N | 0.196 | 0.88 | 2.56 | 0.028 | 0.0022 | 0.0040 | 0.039 | 0.0011 | - | - | - | - | - | - | - | - | - | - | - | - | - | - | - | - | - | - | - | - | Inventive steel |
| O | 0.278 | 0.83 | 3.45 | 0.018 | 0.0016 | 0.0034 | 0.040 | 0.0016 | 0.040 | - | - | - | - | - | - | - | - | - | - | - | - | - | - | - | - | - | - | - | Comparative steel |
| P | 0.155 | 2.08 | 3.56 | 0.019 | 0.0027 | 0.0032 | 0.044 | 0.0029 | 0.044 | - | - | - | - | - | - | - | - | - | - | - | - | - | - | - | - | - | - | - | Comparative steel |
| Q | 0.199 | 1.45 | 3.50 | 0.027 | 0.0025 | 0.0044 | 0.025 | 0.0024 | - | - | - | - | - | - | - | - | - | - | - | - | - | - | - | - | - | - | - | - | Comparative steel |
| R | _0.022_ | 0.41 | 3.56 | 0.020 | 0.0023 | 0.0035 | 0.029 | 0.0011 | 0.047 | - | - | - | - | - | - | - | - | - | - | - | - | - | - | - | - | - | - | - | Comparative steel |
| S | 0.203 | _3.14_ | 3.48 | 0.027 | 0.0023 | 0.0037 | 0.032 | 0.0012 | - | - | - | - | - | - | - | - | - | - | - | - | - | - | - | - | - | - | - | - | Comparative steel |
| T | 0.186 | 0.31 | _8.32_ | 0.025 | 0.0024 | 0.0026 | 0.035 | 0.0024 | - | - | - | - | - | - | - | - | - | - | - | - | - | - | - | - | - | - | - | - | Comparative steel |
| U | 0.157 | 0.74 | _0.04_ | 0.018 | 0.0018 | 0.0031 | 0.031 | 0.0008 | 0.017 | - | - | - | - | - | - | - | - | - | - | - | - | - | - | - | - | - | - | - | Comparative steel |
| V | 0.163 | 0.61 | 2.53 | 0.019 | 0.0020 | 0.0039 | 0.041 | 0.0017 | _0.255_ | - | - | - | - | - | - | - | - | - | - | - | - | - | - | - | - | - | - | - | Comparative steel |
| W | 0.145 | 0.76 | 3.49 | 0.020 | 0.0024 | 0.0036 | 0.038 | 0.0005 | - | 0.040 | - | - | - | - | - | - | - | - | - | - | - | - | - | - | - | - | - | - | Inventive steel |
| X | 0.156 | 0.70 | 4.47 | 0.032 | 0.0023 | 0.0038 | 0.045 | 0.0018 | 0.010 | 0.020 | - | - | - | - | - | - | - | - | - | - | - | - | - | - | - | - | - | - | Inventive steel |
| Y | 0.121 | 1.13 | 3.59 | 0.033 | 0.0025 | 0.0027 | 0.044 | 0.0010 | 0.088 | - | 0.149 | - | - | - | - | - | - | - | - | - | - | - | - | - | - | - | - | - | Inventive steel |
| Z | 0.098 | 1.18 | 4.08 | 0.028 | 0.0025 | 0.0032 | 0.042 | 0.0011 | - | - | - | 0.022 | - | - | - | - | - | - | - | - | - | - | - | - | - | - | - | - | Inventive steel |
| AA | 0.148 | 0.38 | 3.41 | 0.033 | 0.0023 | 0.0044 | 0.039 | 0.0004 | 0.022 | - | - | - | 0.0020 | - | - | - | - | - | - | - | - | - | - | - | - | - | - | - | Inventive steel |
| AB | 0.191 | 0.68 | 5.94 | 0.023 | 0.0022 | 0.0039 | 0.016 | 0.0024 | 0.013 | - | - | - | - | 0.451 | - | - | - | - | - | - | - | - | - | - | - | - | - | - | Inventive steel |
| AC | 0.095 | 0.51 | 6.35 | 0.023 | 0.0025 | 0.0037 | 0.055 | 0.0018 | 0.062 | - | - | - | - | - | 0.213 | - | - | - | - | - | - | - | - | - | - | - | - | - | Inventive steel |
| AD | 0.126 | 0.69 | 3.70 | 0.019 | 0.0027 | 0.0036 | 0.061 | 0.0003 | 0.049 | - | - | - | - | - | - | 0.601 | - | - | - | - | - | - | - | - | - | - | - | - | Inventive steel |
| AE | 0.103 | 1.05 | 2.80 | 0.026 | 0.0026 | 0.0032 | 0.030 | 0.0018 | 0.025 | - | - | - | - | - | - | - | 0.302 | - | - | - | - | - | - | - | - | - | - | - | Inventive steel |
| AF | 0.108 | 0.52 | 3.57 | 0.023 | 0.0024 | 0.0028 | 0.043 | 0.0005 | - | - | - | - | - | - | - | - | - | 0.12 | - | - | - | - | - | - | - | - | - | - | Inventive steel |
| AG | 0.121 | 0.55 | 3.18 | 0.026 | 0.0021 | 0.0035 | 0.034 | 0.0024 | 0.033 | - | - | - | - | - | - | - | - | - | 0.006 | - | - | - | - | - | - | - | - | - | Inventive steel |
| AH | 0.158 | 0.40 | 3.24 | 0.017 | 0.0021 | 0.0023 | 0.034 | 0.0016 | 0.094 | - | - | - | - | - | - | - | - | - | - | 0.051 | - | - | - | - | - | - | - | - | Inventive steel |
| AI | 0.136 | 0.70 | 3.58 | 0.019 | 0.0020 | 0.0030 | 0.030 | 0.0014 | - | - | - | - | - | - | - | - | - | - | - | - | 0.007 | - | - | - | - | - | - | - | Inventive steel |
| AJ | 0.201 | 0.39 | 2.98 | 0.034 | 0.0031 | 0.0025 | 0.031 | 0.0031 | - | - | 0.015 | - | - | - | - | - | - | - | 0.007 | - | - | - | - | - | - | - | - | - | Inventive steel |
| AK | 0.210 | 0.22 | 3.72 | 0.024 | 0.0027 | 0.0038 | 0.033 | 0.0013 | - | - | 0.030 | - | - | - | - | - | - | - | - | - | 0.009 | - | - | - | - | - | - | - | Inventive steel |
| AL | 0.211 | 0.96 | 3.56 | 0.025 | 0.0025 | 0.0038 | 0.042 | 0.0032 | - | - | - | - | - | - | - | - | - | - | - | - | - | 0.0033 | - | - | - | - | - | - | Inventive steel |
| AM | 0.197 | 0.99 | 3.79 | 0.021 | 0.0022 | 0.0035 | 0.036 | 0.0021 | - | - | - | - | - | - | - | - | - | - | - | - | - | - | 0.0049 | - | - | - | - | - | Inventive steel |
| AN | 0.242 | 0.03 | 3.04 | 0.024 | 0.0025 | 0.0028 | 0.039 | 0.0010 | 0.007 | - | - | - | - | - | - | - | - | - | - | - | - | - | - | 0.0120 | - | - | - | - | Inventive steel |
| AO | 0.185 | 0.85 | 2.94 | 0.010 | 0.0018 | 0.0030 | 0.030 | 0.0012 | 0.021 | - | - | - | - | - | - | - | - | 0.15 | - | - | - | - | - | - | - | - | - | - | Inventive steel |
| AP | 0.190 | 0.91 | 2.88 | 0.008 | 0.0018 | 0.0031 | 0.033 | 0.0007 | 0.015 | - | - | - | - | - | - | - | - | - | - | - | - | - | - | - | 0.014 | - | - | - | Inventive steel |
| AQ | 0.167 | 1.00 | 3.02 | 0.015 | 0.0020 | 0.0033 | 0.032 | 0.0015 | - | - | - | - | - | - | - | - | - | - | - | - | - | - | - | - | - | 0.03 | - | - | Inventive steel |
| AR | 0.200 | 0.58 | 2.74 | 0.022 | 0.0021 | 0.0028 | 0.034 | 0.0020 | 0.034 | - | - | - | - | - | - | - | - | - | - | - | - | - | - | - | - | - | 0.082 | - | Inventive steel |
| AS | 0.078 | 0.05 | 6.10 | 0.020 | 0.0029 | 0.0034 | 0.039 | 0.0028 | - | - | - | - | - | - | - | - | - | - | - | - | - | - | - | - | - | - | - | 0.0024 | Inventive steel |

Underlined value: Outside the range of the invention.   "-" indicates that the content is at an incidental impurity level.

[Table 2]

| Steel type | Ms temperature (°C) | Ac$_1$ transformation temperature (°C) | Ac$_3$ transformation temperature (°C) | Bs temperatur e (°C) | $\delta_{LME}$ | Remarks |
|---|---|---|---|---|---|---|
| A | 352 | 659 | 774 | 316 | 0.85 | Inventive steel |
| B | 374 | 679 | 801 | 358 | 0.89 | Inventive steel |
| C | 378 | 674 | 819 | 318 | 0.93 | Inventive steel |
| D | 338 | 673 | 751 | 381 | 0.97 | Inventive steel |
| E | 405 | 671 | 818 | 343 | 0.78 | Inventive steel |
| F | 531 | 764 | 963 | 519 | 0.99 | Inventive steel |
| G | 341 | 655 | 768 | 328 | 0.82 | Inventive steel |
| H | 395 | 670 | 805 | 348 | 0.77 | Inventive steel |
| I | 460 | 723 | 878 | 424 | 0.96 | Inventive steel |
| J | 354 | 652 | 755 | 380 | 0.63 | Inventive steel |
| K | 269 | 586 | 702 | 161 | 0.78 | Inventive steel |
| L | 435 | 718 | 811 | 544 | 0.63 | Inventive steel |
| M | 331 | 639 | 739 | 284 | 0.79 | Inventive steel |
| N | 380 | 686 | 791 | 380 | 0.88 | Inventive steel |
| O | 316 | 659 | 761 | 293 | _1.09_ | Comparative steel |
| P | 355 | 672 | 843 | 173 | _1.47_ | Comparative steel |
| Q | 341 | 666 | 785 | 238 | _1.19_ | Comparative steel |

(continued)

| Steel type | Ms temperature (°C) | Ac$_1$ transformation temperature (°C) | Ac$_3$ transformation temperature (°C) | Bs temperatur e (°C) | $\delta_{LME}$ | Remarks |
|---|---|---|---|---|---|---|
| R | 401 | 655 | 816 | 381 | 0.56 | Comparative steel |
| S | 341 | 685 | 862 | 56 | <u>2.27</u> | Comparative steel |
| T | 153 | 518 | 594 | -46 | 0.99 | Comparative steel |
| U | 494 | 756 | 875 | 617 | 0.65 | Comparative steel |
| V | 393 | 684 | 890 | 419 | 0.72 | Comparative steel |
| W | 361 | 659 | 770 | 324 | 0.81 | Inventive steel |
| X | 318 | 631 | 740 | 245 | 0.85 | Inventive steel |
| Y | 360 | 661 | 842 | 280 | 0.94 | Inventive steel |
| Z | 354 | 648 | 786 | 238 | 0.96 | Inventive steel |
| AA | 363 | 657 | 763 | 371 | 0.67 | Inventive steel |
| AB | 238 | 582 | 675 | 115 | 0.98 | Inventive steel |
| AC | 260 | 580 | 718 | 118 | 0.82 | Inventive steel |
| AD | 348 | 661 | 796 | 318 | 0.77 | Inventive steel |
| AE | 400 | 684 | 834 | 360 | 0.84 | Inventive steel |
| AF | 369 | 654 | 766 | 351 | 0.68 | Inventive steel |
| AG | 381 | 666 | 789 | 378 | 0.69 | Inventive steel |
| AH | 366 | 662 | 795 | 381 | 0.68 | Inventive steel |
| AI | 360 | 656 | 765 | 325 | 0.78 | Inventive steel |
| AJ | 361 | 669 | 753 | 396 | 0.73 | Inventive steel |
| AK | 329 | 646 | 722 | 350 | 0.72 | Inventive steel |
| AL | 335 | 659 | 762 | 283 | 0.99 | Inventive steel |
| AM | 331 | 653 | 758 | 263 | 0.99 | Inventive steel |
| AN | 345 | 662 | 731 | 421 | 0.69 | Inventive steel |
| AO | 369 | 675 | 787 | 353 | 0.87 | Inventive steel |
| AP | 369 | 677 | 789 | 351 | 0.90 | Inventive steel |
| AQ | 372 | 675 | 788 | 334 | 0.91 | Inventive steel |
| AR | 371 | 677 | 784 | 396 | 0.78 | Inventive steel |
| AS | 280 | 580 | 680 | 192 | 0.63 | Inventive steel |
| Underlined value: Outside the range of the invention. "-" indicates that the content is at an incidental impurity level. | | | | | | |

The martensite start temperature, the Ac$_1$ transformation temperature, and the Ac$_3$ transformation temperature were determined using the following formulae.

Martensite start temperature Ms (°C) = 550 - 350 × (%C) - 40 × (%Mn) - 10 × (%Cu) - 17 × (%Ni) - 20 × (%Cr) - 10 × (%Mo) - 35 × (%V) - 5 × (%W) + 30 × (%Al)

Ac$_1$ transformation temperature (°C) = 751 - 16 × (%C) + 11 × (%Si) - 28 × (%Mn) - 5.5 × (%Cu) - 16 × (%Ni) + 13 × (%Cr) + 3.4 × (%Mo)

Ac$_3$ transformation temperature (°C) = 910 - 203 √(%C) + 45 × (%Si) - 30 × (%Mn) - 20 × (%Cu) - 15 × (%Ni) + 11 × (%Cr) + 32 × (%Mo) + 104 × (%V) + 400 × (%Ti) + 200 × (%Al)

Here, (%C), (%Si), (%Mn), (%Ni), (%Cu), (%Cr), (%Mo), (%V), (%Ti), (%W), and (%Al) are the contents (% by mass) of the respective elements and are each zero when the corresponding element is not contained.

[Table 3]

| No. | Steel type | Finish rolling delivery temperature (°C) | Coiling temperature (°C) | Heat treatment of hot rolled steel sheet — Heat treatment temperature (°C) | Heat treatment time (s) | Cold rolling reduction ratio (%) | First annealing — Heat treatment temperature (°C) | Heat treatment time (s) | Cooling stop temperature (°C) | Reheating temperature (°C) | Holding time at reheating temperature (s) | Second annealing — Heating rate (°C/s) | Heat treatment temperature (°C) | Heat treatment time (s) | Cooling stop temperature (°C) | Reheating temperature (°C) | Holding time at reheating temperature (s) | Ms' (°C) | Galvannealing temperature (°C) | Type | Remarks |
|---|---|---|---|---|---|---|---|---|---|---|---|---|---|---|---|---|---|---|---|---|---|
| 1 | A | 900 | 530 | 560 | 18000 | 30.4 | 820 | 180 | 200 | 400 | 230 | 15 | 760 | 120 | 150 | 400 | 120 | 273 | 530 | GA | Inventive Example |
| 2 | A | 830 | 480 | 550 | 23400 | 30.8 | 850 | 160 | 225 | 420 | 150 | 15 | 780 | 150 | 200 | 380 | 150 | 352 | | GI | Inventive Example |
| 3 | A | 930 | 510 | 500 | 14400 | 50.0 | 600 | 160 | 220 | 380 | 250 | 15 | 660 | 150 | 220 | 360 | 150 | 352 | | GI | Comparative Example |
| 4 | A | 900 | 440 | 600 | 18000 | 46.2 | 900 | 15 | 250 | 350 | 140 | 15 | 810 | 25 | 240 | 360 | 130 | 352 | 520 | GA | Comparative Example |
| 5 | A | 790 | 470 | 620 | 18000 | 39.1 | 780 | 2400 | 80 | 200 | 270 | 15 | 800 | 240 | 80 | 380 | 250 | 352 | 500 | GA | Comparative Example |
| 6 | A | 880 | 560 | 570 | 36000 | 47.8 | 800 | 200 | 400 | 430 | 190 | 15 | 680 | 200 | 230 | 440 | 180 | 352 | | GI | Comparative Example |
| 7 | A | 840 | 540 | | | 46.2 | 750 | 250 | 300 | 500 | 220 | 15 | 800 | 250 | 150 | 370 | 215 | 352 | 510 | GA | Comparative Example |
| 8 | A | 830 | 440 | 500 | 14400 | 47.8 | 800 | 120 | 50 | 100 | 310 | 15 | 680 | 120 | 50 | 370 | 300 | 352 | 560 | GA | Comparative Example |
| 9 | A | 840 | 530 | 600 | 8000 | 39.1 | 810 | 50 | 210 | 180 | 2000 | 15 | 700 | 50 | 120 | 360 | 540 | 352 | 530 | GA | Comparative Example |
| 10 | A | 840 | 380 | 530 | 9000 | 39.1 | 820 | 360 | 240 | 400 | 1 | 15 | 820 | 360 | 240 | 380 | 200 | 352 | 530 | GA | Comparative Example |
| 11 | A | 880 | 550 | 520 | 18000 | 72.2 | 820 | 180 | 200 | 250 | 230 | 15 | 760 | 120 | 150 | 400 | 120 | 352 | 520 | GA | Comparative Example |
| 12 | A | 860 | 500 | | | 39.1 | 800 | 250 | 180 | 420 | 640 | 15 | 775 | 250 | 180 | 375 | 500 | 352 | 540 | GA | Inventive Example |
| 13 | B | 900 | 490 | 580 | 21600 | 39.1 | 820 | 200 | 200 | 450 | 650 | 10 | 775 | 90 | 200 | 400 | 100 | 374 | 520 | GA | Inventive Example |
| 14 | C | 890 | 510 | 560 | 21600 | 38.5 | 850 | 150 | 250 | 300 | 200 | 10 | 790 | 150 | 120 | 390 | 180 | 378 | 550 | GA | Inventive Example |
| 15 | A | 880 | 610 | 750 | 21600 | 39.1 | 860 | 180 | 110 | 410 | 80 | 15 | 720 | 180 | 250 | 380 | 60 | 352 | 520 | GA | Comparative Example |
| 16 | A | 880 | 520 | 550 | 21600 | 39.1 | 850 | 120 | 175 | 400 | 250 | 1 | 690 | 150 | 180 | 380 | 340 | 352 | 530 | GA | Comparative Example |
| 17 | A | 890 | 560 | 540 | 23400 | 39.7 | 800 | 150 | 180 | 380 | 300 | 250 | 700 | 180 | 180 | 400 | 250 | 352 | | GI | Inventive Example |
| 18 | A | 850 | 550 | 430 | 36000 | 39.1 | 800 | 300 | 200 | 390 | 360 | 15 | 620 | 300 | 120 | 300 | 370 | 262 | 500 | GA | Comparative Example |
| 19 | A | 870 | 530 | 550 | 18000 | 47.8 | 790 | 360 | 180 | 360 | 520 | 15 | 860 | 360 | 225 | 372 | 520 | 352 | 490 | GA | Inventive Example |
| 20 | A | 910 | 560 | 540 | 7200 | 39.1 | 780 | 150 | 150 | 400 | 180 | 15 | 810 | 1 | 150 | 390 | 170 | 345 | 530 | GA | Comparative Example |
| 21 | A | 870 | 590 | 520 | 21600 | 40.0 | 750 | 180 | 210 | 420 | 280 | 15 | 730 | 900 | 110 | 400 | 260 | 352 | 540 | GA | Comparative Example |
| 22 | A | 860 | 540 | | | 30.0 | 780 | 150 | 200 | 400 | 150 | 15 | 770 | 100 | 370 | 410 | 160 | 352 | | GI | Comparative Example |
| 23 | A | 850 | 540 | | | 39.1 | 830 | 250 | 300 | 440 | 220 | 15 | 775 | 250 | 300 | 710 | 220 | 352 | 510 | GA | Comparative Example |
| 24 | A | 810 | 440 | 610 | 14400 | 42.9 | 830 | 120 | 50 | 400 | 290 | 15 | 800 | 120 | 75 | 250 | 300 | 352 | 510 | GA | Comparative Example |
| 25 | A | 870 | 530 | 500 | 21600 | 39.1 | 830 | 50 | 250 | 430 | 320 | 15 | 805 | 50 | 180 | 400 | 720 | 352 | | GI | Comparative Example |
| 26 | A | 850 | 370 | 520 | 32400 | 47.8 | 840 | 360 | 240 | 400 | 250 | 15 | 820 | 360 | 200 | 400 | 1 | 352 | | GI | Comparative Example |
| 27 | D | 910 | 560 | 540 | 28800 | 39.1 | 820 | 1200 | 140 | 280 | 80 | 15 | 760 | 480 | 140 | 350 | 180 | 338 | | GI | Inventive Example |
| 28 | E | 810 | 550 | 560 | 18000 | 39.1 | 880 | 360 | 280 | 350 | 240 | 15 | 675 | 360 | 180 | 420 | 240 | 405 | 510 | GA | Inventive Example |
| 29 | F | 930 | 590 | 570 | 18000 | 45.5 | 980 | 150 | 100 | 480 | 550 | 10 | 790 | 150 | 180 | 415 | 540 | 378 | 560 | GA | Inventive Example |
| 30 | G | 800 | 600 | 550 | 23400 | 47.8 | 830 | 140 | 100 | 440 | 120 | 10 | 700 | 140 | 100 | 280 | 130 | 261 | 510 | GA | Inventive Example |
| 31 | H | 850 | 500 | 580 | 9000 | 39.1 | 840 | 120 | 200 | 300 | 270 | 10 | 745 | 120 | 180 | 420 | 270 | 395 | 530 | GA | Inventive Example |
| 32 | I | 900 | 560 | 530 | 23400 | 46.2 | 875 | 100 | 150 | 340 | 570 | 10 | 775 | 150 | 160 | 480 | 570 | 460 | 540 | GA | Inventive Example |
| 33 | J | 860 | 490 | 510 | 28800 | 27.3 | 780 | 180 | 200 | 350 | 30 | 15 | 730 | 180 | 130 | 360 | 30 | 354 | | GI | Inventive Example |
| 34 | K | 890 | 450 | 520 | 21600 | 10.0 | 790 | 90 | 60 | 210 | 220 | 10 | 630 | 90 | 60 | 300 | 220 | 269 | | GI | Inventive Example |
| 35 | L | 880 | 590 | 560 | 36000 | 39.1 | 800 | 90 | 225 | 400 | 150 | 10 | 740 | 100 | 170 | 450 | 150 | 435 | 515 | GA | Inventive Example |
| 36 | M | 960 | 610 | 580 | 23400 | 40.0 | 830 | 130 | 200 | 375 | 150 | 10 | 680 | 150 | 150 | 290 | 150 | 210 | 520 | GA | Inventive Example |
| 37 | N | 890 | 570 | 530 | 21600 | 47.8 | 820 | 180 | 200 | 400 | 180 | 10 | 775 | 120 | 200 | 400 | 180 | 265 | 495 | GA | Inventive Example |

Underlined value: Outside the range of the invention.
*GI: Hot-dip galvanized steel sheet (no galvannealing treatment), GA: Hot-dip galvannealed steel sheet

[Table 4]

| No. | Steel type | Finish rolling delivery temperature (°C) | Coiling temperature (°C) | Heat treatment of hot rolled steel sheet — Heat treatment temperature (°C) | Heat treatment time (s) | Cold rolling reduction ratio (%) | First annealing — Heat treatment temperature (°C) | Heat treatment time (s) | Cooling stop temperature (°C) | Reheating temperature (°C) | Holding time at reheating temperature (s) | Second annealing — Heating rate (°C/s) | Heat treatment temperature (°C) | Heat treatment time (s) | Cooling stop temperature (°C) | Reheating temperature (°C) | Holding time at reheating temperature (s) | Ms' (°C) | Galvannealing temperature (°C) | Type | Remarks |
|---|---|---|---|---|---|---|---|---|---|---|---|---|---|---|---|---|---|---|---|---|---|
| 38 | O | 870 | 510 | 520 | 10800 | 50.0 | 910 | 320 | 250 | 350 | 540 | 15 | 700 | 150 | 150 | 440 | 120 | 336 | 500 | GA | Comparative Example |
| 39 | P | 750 | 480 | | | 47.8 | 1080 | 330 | 150 | 310 | 400 | 15 | 880 | 180 | 200 | 400 | 100 | 389 | 520 | GA | Comparative Example |
| 40 | Q | 880 | 540 | 600 | 9000 | 50.0 | 980 | 350 | 210 | 320 | 80 | 15 | 695 | 120 | 125 | 300 | 240 | 224 | | GI | Comparative Example |
| 41 | R | 890 | 540 | | | 46.2 | 820 | 180 | 300 | 350 | 90 | 10 | 720 | 150 | 200 | 420 | 80 | 401 | 515 | GA | Comparative Example |
| 42 | S | 890 | 640 | 540 | 7200 | 45.5 | 870 | 600 | 120 | 150 | 190 | 10 | 730 | 150 | 180 | 350 | 80 | 341 | 540 | GA | Comparative Example |
| 43 | T | 860 | 480 | 480 | 10800 | 42.9 | 650 | 60 | 50 | 100 | 190 | 15 | 570 | 90 | 125 | 320 | 360 | 153 | | GI | Comparative Example |
| 44 | U | 890 | 550 | 520 | 36000 | 40.0 | 880 | 100 | 240 | 500 | 100 | 15 | 770 | 200 | 225 | 500 | 180 | 494 | | GI | Comparative Example |
| 45 | V | 850 | 600 | 560 | 28800 | 50.0 | 890 | 90 | 250 | 400 | 500 | 15 | 725 | 250 | 180 | 370 | 220 | 233 | 520 | GA | Comparative Example |
| 46 | W | 920 | 510 | | | 30.0 | 880 | 120 | 200 | 420 | 180 | 15 | 760 | 120 | 200 | 350 | 300 | 252 | 520 | GA | Inventive Example |
| 47 | X | 890 | 540 | 510 | 36000 | 46.2 | 850 | 150 | 180 | 320 | 360 | 15 | 760 | 50 | 220 | 400 | 540 | 318 | 520 | GA | Inventive Example |
| 48 | Y | 880 | 550 | 570 | 14400 | 30.4 | 850 | 140 | 100 | 380 | 170 | 15 | 715 | 360 | 240 | 420 | 200 | 360 | | GI | Inventive Example |
| 49 | Z | 895 | 320 | | | 47.1 | 825 | 300 | 220 | 325 | 300 | 15 | 740 | 250 | 180 | 400 | 500 | 354 | 510 | GA | Inventive Example |
| 50 | AA | 900 | 620 | 530 | 28800 | 33.3 | 810 | 1200 | 300 | 405 | 240 | 15 | 755 | 420 | 200 | 420 | 100 | 363 | 520 | GA | Inventive Example |
| 51 | AB | 830 | 530 | 530 | 18000 | 36.4 | 830 | 140 | 140 | 180 | 270 | 15 | 730 | 150 | 120 | 300 | 150 | 238 | | GI | Inventive Example |
| 52 | AC | 880 | 740 | 520 | 23400 | 39.1 | 800 | 60 | 120 | 200 | 160 | 15 | 660 | 180 | 250 | 300 | 90 | 260 | | GI | Inventive Example |
| 53 | AD | 885 | 600 | 590 | 21600 | 39.1 | 900 | 240 | 180 | 350 | 100 | 15 | 700 | 300 | 120 | 350 | 300 | 178 | 530 | GA | Inventive Example |
| 54 | AE | 890 | 500 | 520 | 23400 | 47.8 | 900 | 120 | 250 | 330 | 210 | 15 | 830 | 360 | 250 | 420 | 110 | 400 | | GI | Inventive Example |
| 55 | AF | 910 | 500 | 570 | 9000 | 47.8 | 840 | 150 | 180 | 420 | 150 | 15 | 690 | 100 | 150 | 350 | 170 | 195 | 500 | GA | Inventive Example |
| 56 | AG | 920 | 570 | 510 | 28800 | 39.1 | 830 | 150 | 200 | 400 | 200 | 15 | 730 | 450 | 180 | 400 | 260 | 380 | 510 | GA | Inventive Example |
| 57 | AH | 855 | 590 | | | 50.0 | 820 | 160 | 150 | 400 | 180 | 15 | 770 | 100 | 200 | 410 | 160 | 240 | 520 | GA | Inventive Example |
| 58 | AI | 900 | 560 | 520 | 32400 | 30.0 | 910 | 320 | 95 | 380 | 190 | 15 | 720 | 250 | 200 | 300 | 220 | 225 | | GI | Inventive Example |
| 59 | AJ | 900 | 560 | 540 | 10800 | 36.4 | 890 | 180 | 100 | 420 | 125 | 15 | 750 | 120 | 200 | 380 | 300 | 361 | 530 | GA | Inventive Example |
| 60 | AK | 880 | 520 | 540 | 14400 | 33.3 | 800 | 240 | 180 | 350 | 180 | 15 | 680 | 120 | 180 | 340 | 500 | 329 | | GI | Inventive Example |
| 61 | AL | 840 | 560 | 510 | 10800 | 50.0 | 835 | 150 | 170 | 250 | 180 | 15 | 720 | 360 | 200 | 390 | 150 | 335 | 480 | GA | Inventive Example |
| 62 | AM | 860 | 530 | | | 46.7 | 860 | 90 | 210 | 300 | 240 | 15 | 710 | 90 | 220 | 350 | 100 | 331 | 520 | GA | Inventive Example |
| 63 | AN | 840 | 500 | 560 | 21600 | 50.0 | 850 | 150 | 225 | 400 | 180 | 15 | 700 | 500 | 150 | 400 | 150 | 345 | 540 | GA | Inventive Example |
| 64 | AO | 880 | 520 | | | 39.1 | 840 | 180 | 200 | 350 | 200 | 15 | 740 | 120 | 180 | 400 | 200 | 369 | 520 | GA | Inventive Example |
| 65 | AP | 890 | 520 | 540 | 21600 | 30.4 | 850 | 150 | 240 | 360 | 180 | 15 | 760 | 150 | 200 | 420 | 140 | 369 | 530 | GA | Inventive Example |
| 66 | AQ | 850 | 550 | | | 39.1 | 840 | 150 | 250 | 350 | 180 | 15 | 760 | 120 | 175 | 440 | 150 | 372 | 530 | GA | Inventive Example |
| 67 | AR | 860 | 500 | 520 | 10800 | 40.0 | 840 | 120 | 250 | 400 | 200 | 15 | 750 | 90 | 180 | 420 | 200 | 371 | 520 | GA | Inventive Example |
| 68 | AS | 860 | 515 | | 9000 | 45.5 | 820 | 350 | 200 | 300 | 510 | 15 | 660 | 350 | 130 | 330 | 150 | 151 | 510 | GA | Inventive Example |

Underlined value: Outside the range of the invention.
*GI: Hot-dip galvanized steel sheet (no galvannealing treatment), GA: Hot-dip galvannealed steel sheet

[Table 5]

| No. | Steel type | Thickness (mm) | Area fraction of F (%) | Area fraction of M (%) | Sum of area fraction of B and area fraction of TM (%) | Area fraction of RA (%) | Average amount of Mn averaged over all RA grains (% by mass) | Average amount of Mn in RA grains with aspect ratio of 2.0 or more (% by mass) | Average amount of Mn in F (% by mass) | Average amount of Mn in RA grains with aspect ratio of 2.0 or more / average amount of Mn in F | Average amount of C averaged over all RA grains (% by mass) | Average equivalent circular diameter of all RA grains (μm) | Average aspect ratio of all RA grains | $Mn^{\gamma}_{eq.}$ | Ms' (°C) | Amount of C at To composition (% by mass) | Amount of C in RA / amount of C at To composition | Remaining microstructures |
|---|---|---|---|---|---|---|---|---|---|---|---|---|---|---|---|---|---|---|
| 1 | A | 1.6 | 3.4 | 4.3 | 75.2 | 15.8 | 4.50 | 5.15 | 2.78 | 1.85 | 0.42 | 0.5 | 4.9 | 19.35 | 273 | 0.71 | 0.59 | P, θ |
| 2 | A | 1.8 | 5.3 | 4.4 | 78.1 | 11.4 | 4.28 | 4.75 | 2.74 | 1.73 | 0.45 | 0.8 | 5.1 | 13.85 | 352 | 0.69 | 0.65 | P, θ |
| 3 | A | 1.0 | 10.5 | 5.8 | 65.2 | 18.2 | 3.46 | 3.42 | 3.38 | 1.01 | 0.44 | 2.4 | 1.6 | 1.28 | 352 | 0.68 | 0.65 | P, θ |
| 4 | A | 1.4 | 5.3 | 10.5 | 50.3 | 5.2 | 5.27 | 5.74 | 3.12 | 1.84 | 0.34 | 1.3 | 3.9 | 6.31 | 352 | 0.65 | 0.52 | P, θ |
| 5 | A | 1.4 | 10.3 | 4.2 | 60.2 | 17.3 | 3.33 | 3.37 | 3.25 | 1.04 | 0.14 | 1.8 | 1.7 | 0.70 | 352 | 0.71 | 0.56 | P, θ |
| 6 | A | 1.2 | 7.6 | 3.4 | 80.3 | 3.1 | 3.62 | 3.55 | 3.47 | 1.02 | 0.26 | 0.6 | 1.1 | 2.64 | 352 | 0.68 | 0.38 | P, θ |
| 7 | A | 1.4 | 5.5 | 8.7 | 79.8 | 3.5 | 3.59 | 3.64 | 3.49 | 1.04 | 0.09 | 0.2 | 1.2 | 220 | 352 | 0.62 | 0.15 | P, θ |
| 8 | A | 1.2 | 8.9 | 9.8 | 72.5 | 6.8 | 4.21 | 3.22 | 3.12 | 1.03 | 0.42 | 0.8 | 3.7 | 9.44 | 352 | 0.65 | 1.46 | P, θ |
| 9 | A | 1.4 | 9.8 | 8.7 | 70.3 | 5.4 | 3.54 | 3.60 | 3.48 | 1.03 | 0.20 | 1.4 | 1.3 | 1.06 | 352 | 0.71 | 0.77 | P, θ |
| 10 | A | 1.4 | 13.5 | 8.6 | 64.6 | 5.2 | 3.38 | 3.39 | 3.25 | 1.04 | 0.18 | 1.8 | 1.3 | 0.74 | 352 | 0.71 | 0.68 | P, θ |
| 11 | A | 1.0 | 3.4 | 4.3 | 75.2 | 15.8 | 3.66 | 3.59 | 3.49 | 1.03 | 0.66 | 0.8 | 3.4 | 10.12 | 352 | 0.71 | 1.11 | P, θ |
| 12 | A | 1.4 | 2.2 | 9.5 | 70.6 | 15.5 | 4.48 | 4.51 | 1.71 | 2.64 | 0.44 | 0.9 | 5.1 | 12.44 | 352 | 0.65 | 0.68 | P, θ |
| 13 | B | 1.4 | 15.2 | 6.4 | 60.3 | 15.5 | 4.05 | 4.63 | 1.25 | 3.70 | 0.45 | 0.7 | 4.2 | 12.72 | 374 | 0.70 | 0.64 | P, θ |
| 14 | C | 1.6 | 8.1 | 9.4 | 66.6 | 10.8 | 4.49 | 5.13 | 1.81 | 2.83 | 0.46 | 0.6 | 3.5 | 13.09 | 378 | 0.63 | 0.73 | P, θ |
| 15 | A | 1.4 | 24.7 | 10.6 | 40.3 | 18.2 | 5.63 | 5.74 | 2.48 | 2.31 | 0.45 | 1.2 | 1.1 | 2.17 | 352 | 0.68 | 0.66 | P, θ |
| 16 | A | 1.4 | 18.1 | 6.7 | 60.8 | 14.3 | 3.40 | 3.38 | 3.30 | 1.02 | 0.20 | 2.4 | 1.4 | 0.65 | 352 | 0.72 | 0.28 | P, θ |
| 17 | A | 1.4 | 10.3 | 3.8 | 72.1 | 10.2 | 6.55 | 6.80 | 2.11 | 3.22 | 0.36 | 0.9 | 2.1 | 5.50 | 352 | 0.71 | 1.24 | P, θ |
| 18 | A | 1.4 | 60.6 | 12.4 | 20.3 | 2.4 | 6.01 | 6.71 | 0.88 | 7.60 | 0.40 | 0.3 | 2.5 | 20.13 | 262 | 0.65 | 0.62 | P, θ |
| 19 | A | 1.2 | 2.0 | 9.9 | 79.8 | 6.0 | 4.55 | 5.38 | 3.10 | 1.74 | 0.36 | 1.5 | 3.8 | 5.09 | 352 | 0.66 | 0.55 | P, θ |
| 20 | A | 1.4 | 15.7 | 40.8 | 36.2 | 1.1 | 3.56 | 3.48 | 3.41 | 1.02 | 0.32 | 0.5 | 4.7 | 15.33 | 345 | 0.65 | 0.49 | P, θ |

(continued)

| No. | Steel type | Thickness (mm) | Area fraction of F (%) | Area fraction of M (%) | Sum of area fraction of B and area fraction of TM (%) | Area fraction of RA (%) | Average amount of Mn averaged over all RA grains (% by mass) | Average amount of Mn in RA grains with aspect ratio of 2.0 or more (% by mass) | Average amount of Mn in F (% by mass) | Average amount of Mn in RA grains with aspect ratio of 2.0 or more / average amount of Mn in F | Average amount of C averaged over all RA grains (% by mass) | Average equivalent circular diameter of all RA grains (μm) | Average aspect ratio of all RA grains | $Mn^{\gamma}_{eq.}$ | Ms' (°C) | Amount of C at To composition (% by mass) | Amount of C in RA / amount of C at To composition | Remaining microstructures |
|---|---|---|---|---|---|---|---|---|---|---|---|---|---|---|---|---|---|---|
| 21 | A | 1.2 | 9.4 | 14.0 | 70.4 | 4.3 | 3.55 | 3.52 | 3.42 | 1.03 | 0.16 | 3.4 | 5.1 | 1.41 | 352 | 0.68 | 0.24 | P, θ |
| 22 | A | 1.4 | 6.5 | 74.3 | 1.6 | 16.6 | 5.92 | 5.99 | 3.04 | 1.97 | 0.38 | 1.9 | 5.4 | 6.54 | 352 | 0.71 | 0.54 | P, θ |
| 23 | A | 1.4 | 6.6 | 12.4 | 30.3 | 8.4 | 4.16 | 4.24 | 2.97 | 1.43 | 0.24 | 0.8 | 6.2 | 11.63 | 352 | 0.62 | 0.39 | P, θ |
| 24 | A | 1.2 | 7.1 | 44.3 | 30.1 | 12.4 | 4.39 | 4.43 | 2.71 | 1.63 | 0.32 | 1.4 | 5.1 | 6.72 | 352 | 0.65 | 0.49 | P, θ |
| 25 | A | 1.4 | 25.7 | 14.5 | 28.5 | 2.9 | 4.56 | 5.30 | 2.80 | 1.90 | 0.13 | 0.7 | 3.9 | 5.44 | 352 | 0.62 | 0.21 | P, θ |
| 26 | A | 1.2 | 7.2 | 47.9 | 33.3 | 3.4 | 4.14 | 4.73 | 2.10 | 2.25 | 0.29 | 1.1 | 3.4 | 5.20 | 352 | 0.62 | 0.47 | P, θ |
| 27 | D | 1.4 | 4.7 | 3.5 | 70.5 | 19.9 | 10.02 | 10.23 | 3.10 | 3.30 | 0.51 | 1.2 | 5.4 | 14.04 | 338 | 0.67 | 0.76 | P, θ |
| 28 | E | 1.4 | 8.5 | 5.0 | 70.9 | 10.3 | 7.90 | 8.42 | 2.89 | 2.91 | 0.49 | 1.8 | 4.7 | 7.42 | 405 | 0.55 | 0.89 | P, θ |
| 29 | F | 1.2 | 2.2 | 3.1 | 77.4 | 17.1 | 4.65 | 5.08 | 2.27 | 2.24 | 0.50 | 0.7 | 6.3 | 21.09 | 378 | 0.70 | 0.71 | P, θ |
| 30 | G | 1.2 | 2.3 | 8.0 | 75.2 | 14.4 | 10.99 | 11.24 | 4.45 | 2.53 | 0.50 | 0.9 | 5.5 | 19.58 | 261 | 0.62 | 0.81 | P, θ |
| 31 | H | 1.4 | 8.1 | 8.8 | 64.0 | 15.3 | 6.11 | 6.66 | 2.88 | 2.31 | 0.32 | 1.3 | 8.3 | 13.89 | 395 | 0.59 | 0.54 | P, θ |
| 32 | I | 1.4 | 2.1 | 7.9 | 78.4 | 11.1 | 8.23 | 8.52 | 2.45 | 3.47 | 0.45 | 1.6 | 6.4 | 11.25 | 460 | 0.71 | 0.64 | P, θ |
| 33 | J | 1.6 | 3.0 | 8.0 | 75.3 | 9.8 | 5.99 | 6.01 | 2.92 | 2.06 | 0.51 | 1.0 | 3.3 | 8.64 | 354 | 0.71 | 0.72 | P, θ |
| 34 | K | 1.8 | 10.4 | 8.5 | 60.4 | 17.9 | 7.81 | 7.90 | 3.20 | 2.47 | 0.41 | 1.1 | 5.0 | 12.06 | 269 | 0.51 | 0.80 | P, θ |
| 35 | L | 1.4 | 3.0 | 9.6 | 70.0 | 15.0 | 7.89 | 8.13 | 1.91 | 4.26 | 0.44 | 0.9 | 2.9 | 8.84 | 435 | 0.65 | 0.68 | P, θ |
| 36 | M | 1.2 | 6.6 | 7.5 | 70.6 | 14.3 | 6.95 | 7.13 | 2.24 | 3.18 | 0.32 | 0.5 | 5.2 | 23.68 | 210 | 0.63 | 0.51 | P, θ |
| 37 | N | 1.2 | 8.0 | 9.1 | 65.8 | 16.0 | 5.52 | 5.77 | 2.45 | 2.36 | 0.28 | 0.4 | 4.5 | 21.53 | 265 | 0.71 | 0.40 | P, θ |

Underlined value: Outside the range of the invention.

F: Ferrite, M: Fresh martensite, B: Bainite, RA: Retained austenite

TM: Tempered martensite, B: Bainite, P: Pearlite, θ: Cementite

[Table 6]

| No. | Steel type | Thickness (mm) | Area fraction of F (%) | Area fraction of M (%) | Sum of area fraction of B and area fraction of TM (%) | Area fraction of RA (%) | Average amount of Mn averaged over all RA grains (% by mass) | Average amount of Mn in RA grains with aspect ratio of 2.0 or more (% by mass) | Average amount of Mn in F (% by mass) | Average amount of Mn in RA grains with aspect ratio of 2.0 or more / average amount of Mn in F | Average amount of C averaged over all RA grains (% by mass) | Average equivalent circular diameter of all RA grains (μm) | Average aspect ratio of all RA grains | $Mn^Y_{eq.}$ | Ms' (°C) | Amount of C at To composition (% by mass) | Amount of C in RA / amount of C at $T_0$ composition | Remaining microstructures |
|---|---|---|---|---|---|---|---|---|---|---|---|---|---|---|---|---|---|---|
| 38 | O | 1.4 | 8.6 | 5.7 | 60.8 | 20.1 | 7.15 | 7.32 | 2.65 | 2.70 | 0.38 | 1.2 | 5.1 | 10.61 | 316 | 0.71 | 0.54 | P, θ |
| 39 | P | 1.2 | 5.5 | 4.8 | 70.1 | 15.2 | 6.90 | 7.23 | 2.98 | 2.32 | 0.47 | 0.8 | 4.2 | 14.15 | 355 | 0.68 | 0.69 | P, θ |
| 40 | Q | 1.4 | 23.4 | 5.7 | 45.8 | 21.4 | 9.93 | 10.07 | 6.12 | 1.62 | 0.45 | 0.7 | 5.5 | 23.29 | 220 | 0.71 | 0.63 | P, θ |
| 41 | R | 1.4 | <u>46.5</u> | <u>0.1</u> | 42.5 | 7.0 | 3.71 | 4.65 | 2.57 | 1.44 | 0.55 | 0.7 | 4.1 | 12.96 | 401 | 0.68 | 0.81 | P, θ |
| 42 | S | 1.2 | 10.1 | 6.8 | 70.3 | 12.1 | 4.93 | 5.90 | 2.12 | 2.32 | 0.50 | 1.3 | 5.3 | 9.81 | 341 | 0.66 | 0.75 | P, θ |
| 43 | T | 1.2 | 18.3 | 4.2 | 45.7 | 26.7 | 13.50 | 13.64 | 3.10 | 4.35 | 0.40 | 1.4 | 4.3 | 9.74 | 153 | 0.28 | 0.87 | P, θ |
| 44 | U | 1.2 | 29.9 | 8.8 | 46.7 | 6.0 | 2.66 | 3.35 | 2.03 | 1.31 | 0.47 | 0.8 | 5.1 | 11.05 | 494 | 0.83 | 0.57 | P, θ |
| 45 | V | 1.4 | 23.1 | 11.5 | 52.2 | 12.2 | 5.22 | 5.34 | 2.41 | 2.17 | 0.50 | 0.6 | 6.2 | 25.29 | 233 | 0.79 | 0.63 | P, θ |
| 46 | W | 1.4 | 10.2 | 4.2 | 71.3 | 10.0 | 5.11 | 5.63 | 3.02 | 1.69 | 0.52 | 0.7 | 6.1 | 21.45 | 252 | 0.66 | 0.79 | P, θ |
| 47 | X | 1.4 | 11.1 | 7.0 | 68.5 | 12.7 | 5.24 | 6.01 | 2.56 | 2.05 | 0.53 | 1.0 | 4.6 | 11.52 | 318 | 0.61 | 0.87 | P, θ |
| 48 | Y | 1.6 | 22.1 | 8.1 | 50.2 | 19.3 | 4.86 | 5.84 | 2.93 | 1.66 | 0.46 | 1.1 | 5.4 | 11.35 | 360 | 0.63 | 0.73 | P, θ |
| 49 | Z | 1.8 | 4.1 | 4.7 | 69.5 | 12.0 | 5.44 | 6.33 | 4.21 | 1.29 | 0.48 | 1.2 | 5.3 | 10.93 | 354 | 0.65 | 0.74 | P, θ |
| 50 | AA | 1.6 | 2.8 | 5.5 | 75.5 | 15.3 | 4.80 | 5.24 | 3.03 | 1.58 | 0.42 | 1.5 | 6.0 | 8.85 | 363 | 0.66 | 0.64 | P, θ |
| 51 | AB | 1.4 | 5.2 | 6.6 | 70.1 | 16.8 | 9.98 | 10.84 | 2.10 | 4.75 | 0.49 | 1.7 | 5.9 | 10.68 | 238 | 0.47 | 0.80 | P, θ |
| 52 | AC | 1.4 | 12.0 | 4.8 | 60.0 | 22.8 | 10.44 | 10.87 | 1.93 | 5.41 | 0.35 | 0.8 | 4.1 | 14.15 | 260 | 0.45 | 0.77 | P, θ |
| 53 | AD | 1.4 | 10.2 | 5.1 | 71.3 | 11.3 | 4.96 | 5.01 | 3.02 | 1.64 | 0.44 | 0.4 | 5.1 | 29.25 | 178 | 0.64 | 0.69 | P, θ |
| 54 | AE | 1.2 | 9.3 | 4.1 | 69.9 | 13.6 | 5.07 | 5.55 | 2.93 | 1.73 | 0.35 | 1.1 | 4.8 | 9.01 | 400 | 0.71 | 0.49 | P, θ |
| 55 | AF | 1.2 | 8.5 | 3.8 | 70.3 | 15.8 | 4.36 | 4.37 | 2.74 | 1.59 | 0.43 | 0.4 | 5.4 | 28.47 | 195 | 0.65 | 0.67 | P, θ |
| 56 | AG | 1.4 | 21.1 | 11.5 | 42.3 | 20.4 | 5.58 | 5.81 | 3.00 | 1.86 | 0.35 | 0.6 | 4.2 | 15.04 | 380 | 0.71 | 0.50 | P, θ |
| 57 | AH | 1.2 | 5.9 | 8.6 | 66.6 | 15.5 | 6.43 | 7.41 | 3.28 | 1.96 | 0.41 | 0.6 | 5.6 | 22.88 | 240 | 0.73 | 0.56 | P, θ |

(continued)

| No. | Steel type | Thickness (mm) | Area fraction of F (%) | Area fraction of M (%) | Sum of area fraction of B and area fraction of TM (%) | Area fraction of RA (%) | Average amount of Mn averaged over all RA grains (% by mass) | Average amount of Mn in RA grains with aspect ratio of 2.0 or more (% by mass) | Average amount of Mn in F (% by mass) | Average amount of Mn in RA grains with aspect ratio of 2.0 or more / average amount of Mn in F | Average amount of C averaged over all RA grains (% by mass) | Average equivalent circular diameter of all RA grains (μm) | Average aspect ratio of all RA grains | $Mn^Y_{eq.}$ | Ms' (°C) | Amount of C at To composition (% by mass) | Amount of C in RA / amount of C at $T_0$ composition | Remaining microstructures |
|---|---|---|---|---|---|---|---|---|---|---|---|---|---|---|---|---|---|---|
| 58 | AI | 1.4 | 10.3 | 7.6 | 58.3 | 20.5 | 6.89 | 7.01 | 2.62 | 2.63 | 0.46 | 0.5 | 4.5 | 24.04 | 225 | 0.62 | 0.74 | P, θ |
| 59 | AJ | 1.4 | 5.7 | 2.9 | 62.0 | 21.0 | 5.42 | 6.11 | 2.54 | 2.13 | 0.45 | 0.9 | 4.5 | 12.04 | 361 | 0.66 | 0.68 | P, θ |
| 60 | AK | 1.4 | 4.7 | 5.1 | 64.5 | 17.8 | 4.79 | 5.70 | 1.71 | 2.80 | 0.41 | 1.5 | 5.1 | 7.39 | 329 | 0.60 | 0.68 | P, θ |
| 61 | AL | 1.2 | 2.7 | 9.1 | 77.6 | 10.5 | 5.01 | 5.75 | 2.04 | 2.46 | 0.44 | 1.0 | 6.1 | 14.02 | 335 | 0.62 | 0.71 | P, θ |
| 62 | AM | 1.6 | 6.3 | 7.3 | 60.8 | 18.5 | 4.99 | 5.64 | 2.85 | 1.75 | 0.40 | 1.3 | 5.1 | 8.51 | 331 | 0.65 | 0.61 | P, θ |
| 63 | AN | 1.4 | 10.5 | 9.7 | 66.1 | 8.1 | 5.32 | 5.68 | 2.75 | 1.93 | 0.39 | 1.1 | 6.2 | 12.57 | 345 | 0.68 | 0.57 | P, θ |
| 64 | AO | 1.4 | 3.5 | 4.8 | 78.0 | 13.4 | 4.99 | 5.94 | 2.10 | 2.38 | 0.40 | 1.0 | 5.8 | 12.71 | 369 | 0.69 | 0.58 | P, θ |
| 65 | AP | 1.6 | 4.4 | 5.0 | 75.2 | 13.6 | 5.14 | 5.27 | 1.94 | 2.65 | 0.41 | 1.2 | 5.4 | 10.10 | 369 | 0.66 | 0.62 | P, θ |
| 66 | AQ | 1.4 | 5.2 | 5.2 | 71.2 | 14.9 | 5.23 | 5.35 | 1.95 | 2.68 | 0.42 | 1.1 | 5.9 | 12.27 | 372 | 0.60 | 0.70 | P, θ |
| 67 | AR | 1.2 | 6.3 | 3.6 | 75.4 | 12.4 | 5.34 | 6.13 | 1.87 | 2.86 | 0.39 | 1.3 | 6.0 | 10.31 | 371 | 0.65 | 0.60 | P, θ |
| 68 | AS | 1.2 | 6.7 | 8.9 | 71.8 | 11.0 | 8.07 | 8.09 | 4.50 | 1.79 | 0.53 | 0.9 | 8.5 | 27.89 | 151 | 0.41 | 0.81 | P, θ |

Underlined value: Outside the range of the invention.

F: Ferrite, M: Fresh martensite, RA: Retained austenite TM: Tempered martensite, B: Bainite, P: Pearlite, θ: Cementite

[Table 7]

| No. | TS (MPa) | EL (%) | EL' (%) | R (mm) | R/t | Post-coating treatment ductility EL/EL' | LME resistance | Remarks |
|---|---|---|---|---|---|---|---|---|
| 1 | 1234 | 16.9 | 18.8 | 2.5 | 1.6 | 0.90 | ○ | Inventive Example |
| 2 | 1255 | 16.8 | 16.8 | 4.0 | 2.2 | 1.00 | ○ | Inventive Example |
| 3 | 1224 | 9.8 | 15.8 | 2.0 | 2.0 | 0.62 | ○ | Comparative Example |
| 4 | 1412 | 10.8 | 13.7 | 3.0 | 2.1 | 0.79 | ○ | Comparative Example |
| 5 | 1251 | 10.9 | 19.5 | 2.0 | 1.4 | 0.56 | ○ | Comparative Example |
| 6 | 1210 | 11.2 | 17.4 | 3.0 | 2.5 | 0.64 | ○ | Comparative Example |
| 7 | 1270 | 10.9 | 17.3 | 3.0 | 2.1 | 0.63 | ○ | Comparative Example |
| 8 | 1220 | 11.3 | 11.6 | 3.5 | 2.9 | 0.97 | ○ | Comparative Example |
| 9 | 1231 | 10.4 | 17.9 | 3.0 | 2.1 | 0.58 | ○ | Comparative Example |
| 10 | 1338 | 10.5 | 20.3 | 3.0 | 2.1 | 0.52 | ○ | Comparative Example |
| 11 | 1250 | 11.1 | 11.6 | 2.5 | 2.5 | 0.96 | ○ | Comparative Example |
| 12 | 1257 | 14.8 | 18.3 | 3.0 | 2.1 | 0.81 | ○ | Inventive Example |
| 13 | 1254 | 18.8 | 21.0 | 1.5 | 1.1 | 0.90 | ○ | Inventive Example |
| 14 | 1198 | 16.1 | 21.1 | 3.0 | 1.9 | 0.76 | ○ | Inventive Example |
| 15 | 1197 | 17.4 | 28.2 | 2.0 | 1.4 | 0.62 | ○ | Comparative Example |
| 16 | 1185 | 10.4 | 16.5 | 2.5 | 1.8 | 0.63 | ○ | Comparative Example |
| 17 | 1295 | 17.1 | 17.1 | 3.5 | 2.5 | 1.00 | ○ | Inventive Example |
| 18 | 884 | 24.8 | 25.9 | 0.5 | 0.4 | 0.96 | ○ | Comparative Example |
| 19 | 1181 | 12.1 | 16.0 | 1.0 | 0.8 | 0.76 | ○ | Inventive Example |
| 20 | 1245 | 10.6 | 14.6 | 4.0 | 2.9 | 0.73 | ○ | Comparative Example |
| 21 | 1200 | 10.4 | 20.9 | 1.0 | 0.8 | 0.50 | ○ | Comparative Example |
| 22 | 1235 | 15.4 | 15.4 | 4.5 | 3.2 | 1.00 | ○ | Comparative Example |
| 23 | 1211 | 13.5 | 14.4 | 5.0 | 3.6 | 0.94 | ○ | Comparative Example |
| 24 | 1243 | 10.1 | 13.3 | 4.5 | 3.8 | 0.76 | ○ | Comparative Example |
| 25 | 1199 | 10.5 | 10.5 | 5.0 | 3.6 | 1.00 | ○ | Comparative Example |
| 26 | 1195 | 10.6 | 10.6 | 5.0 | 4.2 | 1.00 | ○ | Comparative Example |
| 27 | 1310 | 15.4 | 15.4 | 1.0 | 0.7 | 1.00 | △ | Inventive Example |
| 28 | 1186 | 12.4 | 13.3 | 3.0 | 2.1 | 0.93 | ◎ | Inventive Example |
| 29 | 1189 | 18.5 | 20.5 | 2.0 | 1.7 | 0.90 | △ | Inventive Example |
| 30 | 1305 | 16.0 | 21.4 | 2.5 | 2.1 | 0.75 | ○ | Inventive Example |
| 31 | 1192 | 12.9 | 18.2 | 2.5 | 1.8 | 0.71 | ◎ | Inventive Example |
| 32 | 1194 | 16.9 | 19.6 | 2.5 | 1.8 | 0.86 | △ | Inventive Example |
| 33 | 1211 | 14.0 | 14.0 | 3.5 | 2.2 | 1.00 | ◎ | Inventive Example |
| 34 | 1296 | 18.0 | 18.0 | 4.0 | 2.2 | 1.00 | ◎ | Inventive Example |
| 35 | 1223 | 13.4 | 15.1 | 2.5 | 1.8 | 0.89 | ◎ | Inventive Example |
| 36 | 1196 | 16.9 | 23.6 | 2.0 | 1.7 | 0.72 | ◎ | Inventive Example |
| 37 | 1300 | 14.0 | 17.2 | 2.5 | 2.1 | 0.81 | ○ | Inventive Example |
| 38 | 1190 | 22.2 | 24.5 | 2.5 | 1.8 | 0.91 | ✕ | Comparative Example |

(continued)

| No. | TS (MPa) | EL (%) | EL' (%) | R (mm) | R/t | Post-coating treatment ductility EL/EL' | LME resistance | Remarks |
|---|---|---|---|---|---|---|---|---|
| 39 | 1185 | 15.1 | 19.8 | 3.0 | 2.5 | 0.76 | ✕ | Comparative Example |
| 40 | 1202 | 14.1 | 14.1 | 3.5 | 2.5 | 1.00 | ✕ | Comparative Example |

Underlined value: Outside the range of the invention.

[Table 8]

| No. | TS (MPa) | EL (%) | EL' (%) | R (mm) | R/t | Post-coating treatment ductility EL/EL' | LME resistance | Remarks |
|---|---|---|---|---|---|---|---|---|
| 41 | 894 | 19.4 | 23.1 | 2.5 | 1.8 | 0.84 | ◎ | Comparative Example |
| 42 | 1222 | 14.3 | 15.2 | 2.0 | 1.7 | 0.94 | ✕ | Comparative Example |
| 43 | 1213 | 10.1 | 10.1 | 2.0 | 1.7 | 1.00 | △ | Comparative Example |
| 44 | 1166 | 14.2 | 14.2 | 2.5 | 2.1 | 1.00 | ◎ | Comparative Example |
| 45 | 1199 | 15.9 | 20.5 | 5.0 | 3.6 | 0.78 | ◎ | Comparative Example |
| 46 | 1234 | 14.5 | 16.2 | 3.0 | 2.1 | 0.89 | ○ | Inventive Example |
| 47 | 1285 | 15.0 | 18.0 | 2.5 | 1.8 | 0.83 | ○ | Inventive Example |
| 48 | 1282 | 14.4 | 14.4 | 3.0 | 1.9 | 1.00 | ○ | Inventive Example |
| 49 | 1213 | 15.8 | 17.1 | 3.5 | 1.9 | 0.92 | △ | Inventive Example |
| 50 | 1242 | 16.7 | 18.7 | 2.0 | 1.3 | 0.89 | ◎ | Inventive Example |
| 51 | 1200 | 16.8 | 16.8 | 2.5 | 1.8 | 1.00 | △ | Inventive Example |
| 52 | 1303 | 14.5 | 14.5 | 2.0 | 1.4 | 1.00 | ○ | Inventive Example |
| 53 | 1283 | 15.3 | 17.1 | 1.5 | 1.1 | 0.89 | ◎ | Inventive Example |
| 54 | 1187 | 14.2 | 14.2 | 2.0 | 1.7 | 1.00 | ○ | Inventive Example |
| 55 | 1234 | 15.9 | 20.0 | 2.5 | 2.1 | 0.80 | ◎ | Inventive Example |
| 56 | 1217 | 16.9 | 19.2 | 3.0 | 2.1 | 0.88 | ◎ | Inventive Example |
| 57 | 1184 | 15.0 | 19.4 | 2.5 | 2.1 | 0.77 | ◎ | Inventive Example |
| 58 | 1221 | 17.1 | 17.1 | 2.5 | 1.8 | 1.00 | ◎ | Inventive Example |
| 59 | 1230 | 15.7 | 20.7 | 3.0 | 2.1 | 0.76 | ◎ | Inventive Example |
| 60 | 1199 | 15.8 | 15.8 | 2.5 | 1.8 | 1.00 | ◎ | Inventive Example |
| 61 | 1245 | 15.3 | 18.4 | 2.5 | 2.1 | 0.83 | △ | Inventive Example |
| 62 | 1201 | 14.0 | 16.5 | 2.5 | 1.6 | 0.85 | △ | Inventive Example |
| 63 | 1213 | 14.7 | 16.7 | 2.5 | 1.8 | 0.88 | ◎ | Inventive Example |
| 64 | 1220 | 16.6 | 17.3 | 2.5 | 1.8 | 0.96 | ◎ | Inventive Example |
| 65 | 1215 | 15.5 | 17.2 | 2.5 | 1.6 | 0.90 | ◎ | Inventive Example |
| 66 | 1205 | 15.0 | 17.5 | 2.5 | 1.8 | 0.86 | ◎ | Inventive Example |
| 67 | 1208 | 15.9 | 17.8 | 2.5 | 2.1 | 0.89 | ◎ | Inventive Example |
| 68 | 1200 | 15.1 | 18.4 | 2.5 | 2.1 | 0.82 | ◎ | Inventive Example |

Underlined value: Outside the range of the invention.

A tensile test was performed according to JIS Z 2241 (2011) using a JIS No. 5 test piece cut from a steel sheet such that the tensile direction was orthogonal to the rolling direction of the steel sheet. The TS (tensile strength) and EL (total elongation) were measured, and the ductility (EL/EL') after galvannealing was also measured for each GA sheet. Here, EL' is the total elongation of a steel sheet not subjected to galvannealing. For each GI sheet, EL = EL'. The mechanical properties were rated excellent when the following relations were satisfied.

$$\mathtt{EL \ \geq \ 12\%}$$

and

$$\mathtt{EL/EL' \ \geq \ 0.7}$$

Bending test measurement was performed according to a V block method in JIS Z 2248(1996) using a bending test piece having a width of 30 mm and a length of 100 mm and cut from one of the annealed steel sheets such that the rolling direction was the binding axis (bending direction). The test with n = 3 was performed at a pressing speed of 100 mm/second using different bending radii. The presence or absence of cracking was determined on the outer side of the bent portion under a stereoscopic microscope. The minimum bending radius with no cracking found was defined as a critical bending radius R. In the present invention, when the critical bending $R/t \leq 2.5$ (t: the thickness of the steel sheet) at 90° V-bending was satisfied, the bendability of the steel sheet was rated excellent.

To evaluate the LME resistance, samples were cut from one of the steel sheets such that the length in a direction orthogonal to the rolling direction was 100 mm and the width in the rolling direction was 30 mm. Two evaluation samples were stacked, and a servo motor pressing-type single-phase direct current (50 Hz) resistance welder attached to a welding gun was used to perform resistance spot welding. The welding was performed at an inclination angle of 5°, and the welding pressure was 3.5 kN. The inclination angle of spot welding is defined as the angle $\theta$ between a line passing through the major axis of the nugget and a line parallel to the surface of the steel sheets in a cross section of the spot welded member. The pattern of the welding current was controlled such that the diameter of the nugget to be obtained was $4.0 \sqrt{t}$. Here, t is the thickness (1.4 mm) of one steel sheet. In the resistance spot welding, DR6 type CuCr electrodes were used, and the clearance between the overlapping evaluation samples and an electrode was 1.5 mm. The holing time for the evaluation of LME resistance was 5 cycles/50 Hz.

For one evaluation, 10 evaluation samples were spot-welded to produce welded members, and a cross section of each spot-welded member was observed using an optical microscope (magnification: 100X) to evaluate the LME resistance. When no cracks were found in all the members, the steel was rated ⊚. When the number of members with cracks was 2 or less and the average depth of the cracks was less than 100 $\mu$m, the steel was rated o. When the number of members with cracks was 2 or less and the average depth of the cracks was 100 $\mu$m or more, the steel was rated $\triangle$. When the number of members with cracks was 3 or more, the steel was rated $\times$. In the Examples, steel with the $\times$ rating was a Comparative Example.

Each of the high-strength coated steel sheets in Inventive Examples has a TS of 1180 MPa or more, and the high-strength coated steel sheets obtained have excellent formability. However, in Comparative Examples, at least one of the TS, EL, post-coating treatment ductility, bendability, and LME resistance is poor.

Industrial Applicability

According to the present invention, a high-strength coated steel sheet is obtained which has a TS (tensile strength) of 1180 MPa or more and having excellent formability and excellent LME resistance. When the high-strength coated steel sheet of the invention is used, for example, for automobile structural members, the weight of the vehicle body can be reduced, and the fuel economy can be improved. Therefore, the high-strength coated steel sheet is extremely valuable in industrial applications.

**Claims**

**1.** A high-strength coated steel sheet having a chemical composition containing, in % by mass,

C: 0.030% or more and 0.300% or less,
Si: 0.01% or more and 2.50% or less,
Mn: 0.10% or more and 8.00% or less,
P: 0.100% or less,

S: 0.0200% or less,
Al: 0.100% or less,
N: 0.0100% or less, and
O: 0.0100% or less,
with the balance being Fe and incidental impurities,
wherein the high-strength coated steel sheet has, at a position 1/4 of a sheet thickness,
a steel microstructure in which an area fraction of ferrite is 1% or more and 30% or less, in which an area fraction of fresh martensite is 1% or more and 15% or less, in which a total area fraction of bainite and tempered martensite is 35% or more and 90% or less, and in which an area fraction of retained austenite is 6% or more,
wherein a value obtained by dividing an average amount (% by mass) of Mn in retained austenite grains having an aspect ratio of 2.0 or more by an average amount (% by mass) of Mn in the ferrite is 1.1 or more,
wherein $Mn\gamma_{eq.}$ determined from formula (1) is 5.0 or more, and
wherein $\delta_{LME}$ determined from formula (2) is 1.0 or less:

$$Mn\gamma_{eq.} = \{\ln([C]\gamma - 0.2) + \ln([Mn]\gamma - 2.6) + 4.30\} \times \lambda\gamma / D\gamma, \tag{1}$$

$$\delta_{LME} = 1 / 2 \times \log\{(1 + [C]) / (0.35 - [C])\} + \{\exp([Si] / 3.23) - 1\} + \{\exp([Mn] / 22) - 1\}, \tag{2}$$

where $[C]y$ and $[Mn]\gamma$ are an average amount (% by mass) of C and an average amount (% by mass) of Mn, respectively, that are averaged over all retained austenite grains;
$\lambda\gamma$ is an average aspect ratio of all the retained austenite grains;
$D\gamma$ is an average equivalent circular diameter ($\mu$m) of all the retained austenite grains; and
[C], [Si], and [Mn] are an amount (% by mass) of C, an amount (% by mass) of Si, and an amount (% by mass) of Mn, respectively, with respect to a total amount of the steel sheet.

2. The high-strength coated steel sheet according to claim 1, wherein the chemical composition further contains, in mass%, at least one element selected from

Ti: 0.200% or less, Nb: 0.200% or less,
V: 0.200% or less, Ta: 0.10% or less,
W: 0.10% or less, B: 0.0100% or less,
Cr: 1.00% or less, Mo: 1.00% or less,
Co: 1.000% or less, Ni: 1.00% or less,
Cu: 1.00% or less, Sn: 0.200% or less,
Sb: 0.200% or less, Ca: 0.0100% or less,
Mg: 0.0100% or less, REMs: 0.0100% or less,
Zr: 0.100% or less, Te: 0.100% or less,
Hf: 0.10% or less, and Bi: 0.200% or less.

3. The high-strength coated steel sheet according to claim 1 or 2, wherein a value obtained by dividing a total amount of C in all the retained austenite grains by an amount of C in a $T_0$ microstructure is less than 1.0.

4. The high-strength coated steel sheet according to any one of claims 1 to 3, wherein the high-strength coated steel sheet includes a galvanized layer.

5. The high-strength coated steel sheet according to claim 4, wherein the galvanized layer is a galvannealed layer.

6. A method for producing the high-strength coated steel sheet according to any one of claims 1 to 3, the method comprising:

heating a steel slab having the chemical composition;
hot-rolling at a finish rolling delivery temperature of 750°C or higher and 1000°C or lower;
coiling at 300°C or higher and 750°C or lower;
cold-rolling at a rolling reduction of 50% or less;
holding at a temperature in a range of higher than or equal to an $Ac_3$ transformation temperature - 50°C for 20 s or longer and 1800 s or shorter; cooling to a cooling stop temperature lower than or equal to martensite start temperature;

reheating to a reheating temperature in a range of higher than or equal to Bs - 150°C and lower than or equal to Bs + 150°C, where Bs is a temperature determined from formula (3); then holding at the reheating temperature for 2 s or longer and 1800 s or shorter; cooling to room temperature;

then heating to a temperature in a range from an $Ac_1$ transformation temperature - 150°C to the $Ac_1$ transformation temperature at a heating rate of 2°C/s or more; holding at a temperature in a range of higher than or equal to the $Ac_1$ transformation temperature for 20 s or longer and 600 s or shorter; cooling to a cooling stop temperature lower than or equal to Ms' determined from formula (4);

reheating to a reheating temperature in a range of higher than or equal to Ms' and lower than or equal to Ms' + 350°C; holding at the reheating temperature for 2 s or longer and 600 s or shorter; performing coating treatment; and cooling to room temperature:

$$Bs = 732 - 202 \times [C] - 108 \times [Si] - 85 \times [Mn] - 39 \times [Mo], \tag{3}$$

where [C], [Si], [Mn], and [Mo] are an amount (% by mass) of C, an amount (% by mass) of Si, an amount (% by mass) of Mn, and an amount (% by mass) of Mo, respectively, with respect to the total amount of the steel sheet and are each zero when a corresponding element is not contained, and

$$Ms' = Ms \times 15 / Mn^{\gamma}_{eq.}, \tag{4}$$

where Ms is the martensite start temperature, and $Mn^{\gamma}_{eq.} = 15$ when $Mn^{\gamma}_{eq.} < 15$.

7. The method for producing the high-strength coated steel sheet according to claim 6, wherein the coating treatment is galvanizing treatment.

8. The method for producing the high-strength coated steel sheet according to claim 7, further comprising, after the galvanizing treatment, performing galvannealing treatment at 450°C or higher and 600°C or lower.

9. The method for producing the high-strength coated steel sheet according to any one of claims 6 to 8, further comprising, after the coiling but before the cold-rolling, holding at a temperature in a range of lower than or equal to the $Ac_1$ transformation temperature for longer than 1800 s.

## INTERNATIONAL SEARCH REPORT

| International application No. |
| --- |
| **PCT/JP2023/031994** |

### A. CLASSIFICATION OF SUBJECT MATTER

*C21D 9/46*(2006.01)i; *C22C 38/00*(2006.01)i; *C22C 38/06*(2006.01)i; *C22C 38/60*(2006.01)i
FI:  C22C38/00 301T; C22C38/06; C22C38/60; C22C38/00 302A; C21D9/46 J

According to International Patent Classification (IPC) or to both national classification and IPC

### B. FIELDS SEARCHED

Minimum documentation searched (classification system followed by classification symbols)

C21D9/46; C22C38/00; C22C38/06; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022/172540 A1 (JFE STEEL CORP) 18 August 2022 (2022-08-18) | 1-9 |
| A | WO 2022/149502 A1 (NIPPON STEEL CORP) 14 July 2022 (2022-07-14) | 1-9 |
| A | KR 10-2021-0080676 A (HYUNDAI STEEL COMPANY) 01 July 2021 (2021-07-01) | 1-9 |
| A | KR 10-2019-0078033 A (POSCO) 04 July 2019 (2019-07-04) | 1-9 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **06 November 2023** | **14 November 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2023/031994**

| Patent document cited in search report | | | Publication date (day/month/year) | Patent family member(s) | | | Publication date (day/month/year) |
|---|---|---|---|---|---|---|---|
| WO | 2022/172540 | A1 | 18 August 2022 | EP | 4253577 | A1 | |
| | | | | CN | 116806274 | A | |
| | | | | KR | 10-2023-0128081 | A | |
| WO | 2022/149502 | A1 | 14 July 2022 | EP | 4223894 | A1 | |
| | | | | CN | 116507747 | A | |
| | | | | KR | 10-2023-0086778 | A | |
| KR | 10-2021-0080676 | A | 01 July 2021 | (Family: none) | | | |
| KR | 10-2019-0078033 | A | 04 July 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61157625 A
- JP 6123966 B

- JP 6901050 B